(19) Europäisches Patentamt / European Patent Office / Office européen des brevets

(11) **EP 4 242 578 B1**

(12) **EUROPEAN PATENT SPECIFICATION**

(45) Date of publication and mention
of the grant of the patent:
**30.07.2025 Bulletin 2025/31**

(21) Application number: **23156450.1**

(22) Date of filing: **14.02.2023**

(51) International Patent Classification (IPC):
***G01B 9/02004*** *(2022.01)*

(52) Cooperative Patent Classification (CPC):
**G01B 9/02027; G01B 11/026;** G01B 9/02004

(54) **OPTICAL INTERFEROMETRIC RANGE SENSOR**

OPTISCHER INTERFEROMETRISCHER ENTFERNUNGSMESSER

CAPTEUR DE DISTANCE INTERFEROMETRIQUE OPTIQUE

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **11.03.2022 JP 2022038290**

(43) Date of publication of application:
**13.09.2023 Bulletin 2023/37**

(73) Proprietor: **OMRON CORPORATION**
**Kyoto, Kyoto 600-8530 (JP)**

(72) Inventors:
• **KIMURA, Kazuya**
**Kyoto-shi, 600-8530 (JP)**
• **NAGASAKI, Yusuke**
**Kyoto-shi, 600-8530 (JP)**
• **HAYAKAWA, Masayuki**
**Kyoto-shi, 600-8530 (JP)**

(74) Representative: **HKW Intellectual Property PartG mbB**
**Theresienhöhe 12**
**80339 München (DE)**

(56) References cited:
**CN-A- 109 883 460     US-A1- 2007 171 425**

• **SHIH-CHU HUANG ET AL: "CROSS-TALK ANALYSIS OF TIME-DIVISION MULTIPLEXING OF POLARIZATION- INSENSITIVE FIBER-OPTIC MICHELSON INTERFEROMETRIC SENSORS WITH A 3 X 3 DIRECTIONAL COUPLER", APPLIED OPTICS, OPTICAL SOCIETY OF AMERICA, WASHINGTON, DC, US, vol. 36, no. 4, 1 February 1997 (1997-02-01), pages 921 - 933, XP000685216, ISSN: 0003-6935**

**Description**

CROSS-REFERENCE TO RELATED APPLICATION

This application claims priority to Japanese Patent Application No. 2022-038290 filed on March 11, 2022.

FIELD

The present invention relates to an optical interferometric range sensor.

BACKGROUND

Nowadays, optical range sensors are commonly used to contactlessly measure the distance to a measurement target. For example, a known optical range sensor includes an optical interferometric range sensor that generates, from light emitted from a wavelength swept light source, interference light based on reference light and measurement light and measures the distance to a measurement target based on the interference light.

In particular, a known multi-stage optical interferometric range sensor includes multiple interferometers for generating interference light to, for example, improve measurement accuracy. For example, WO 2019 / 131 298 describes an optical interference tomographic imaging device including an optical beam controller, a splitter that splits multiple optical beams from the optical beam controller into object light and reference light, an irradiator that irradiates a measurement object with multiple object light beams, and an interference unit that causes object light scattered from the measurement object and the reference light to interfere with each other to be guided to a photodetector.

"Optical frequency-modulated continuous-wave (FMCW) interferometry", Vol. 107, by Jesse Zheng, Springer Science & Business Media, 2005 describes an optical interferometric range sensor that splits light without using any costly component such as a circulator. More specifically, "Optical frequency-modulated continuous-wave (FMCW) interferometry", Vol. 107, by Jesse Zheng, Springer Science & Business Media, 2005 describes an optical interferometric range sensor including a wavelength swept light source, multiple optical couplers, multiple interferometers corresponding to the respective optical couplers, and a light receiver. The multiple optical couplers in the optical interferometric range sensor are connected in series to transmit a portion of light emitted from the wavelength swept light source sequentially from an optical coupler in a preceding stage to an optical coupler in a subsequent stage and split another portion of the light to be transmitted to the interferometers corresponding to the respective optical couplers.

US 2007 / 171 425 A1 discloses a system that includes a first object mounted relative to a second object, the first object being moveable with respect to the second object. The system includes a plurality of interferometers each configured to derive a first wavefront and a second wavefront from input radiation and to combine the first and second wavefronts to provide output radiation including information about an optical path length difference between the paths of the first and second wavefronts, each interferometer including a reflective element positioned in the path of the first wavefront, and at least one of the interferometer's reflective element is mounted on the first object. The system also includes a plurality of fiber waveguides and an electronic controller. Each fiber waveguide is configured to deliver the input radiation to a corresponding interferometer or deliver the output radiation from the corresponding interferometer to a corresponding detector. The electronic controller is configured to monitor a degree of freedom of the first object relative to the second object based on the information from at least one of the interferometers, wherein the degree of freedom is an absolute displacement between the first and second objects.

"Cross-talk analysis of time-division multiplexing of polarization-insensitive fiber-optic Michelson interferometric sensors with a 3× 3 directional coupler." Shih-Chu Huang et al. discloses a time division multiplexing of polarization-insensitive fiber-optic Michelson interferometric sensors (TDM-PIMI's) with a $3 \times 3$ directional coupler. The elimination of polarization-induced fading and the output intensities of the TDM-PIMI system are described and demonstrated. The output intensity of each sensor of the system can be demodulated by a passive homodyne method to increase the sensor bandwidth significantly. The sensor cross talk of the system having an optical gate with a finite extinction ratio is analyzed. The use of a laser source with an adequate coherence length to reduce the sensor cross talk is suggested. The delay-fiber cross talk of the system by Rayleigh backscattering is analyzed and demonstrated.

CN 109 883 460 A discloses a multiplexing device and method for multiplexing a multiplexed fiber optic interferometer based on a pseudo-random code. The device includes four parts: a light source, a pseudo-random code encoding and decoding device, a multiplexed fiber optic interferometer cascade array, and a signal detection and acquisition and demodulation device. The method adopts pseudo-random code to realize multi-way fiber optic interferometer multiplexing technology, using pseudo-random code to encode the input optical signal of the array and use the time-delay optical fiber to control the delay of each transmission optical signal, and completes the decoding and signal extraction at the end of the transmission optical path by matching the transmission delay of each optical signal. This method realizes the multiplexing integration of multiple interferometer arrays in a single fiber, reduces the complexity of large-scale multiplexed array transmission optical path system, and the pseudo-random code has a sharp autocorrelation and a very small cross-correlation value with the noise, which reduces the noise of the transmission system and achieves the noise suppression of the system. The method is suitable for application in large-scale interferometric fiber optic sensor arrays.

SUMMARY

TECHNICAL PROBLEM

In the structure in which light is split to be incident on the interferometers by the multiple optical couplers, the light receiver receives returning light from each interferometer to measure the distance to a measurement target. The light receiver may receive returning light with a non-uniform signal strength. This may lower the measurement accuracy.

One or more aspects of the present invention are directed to an optical interferometric range sensor that can measure a distance with high accuracy with a light receiver receiving, from each of interferometers, returning light having an appropriate signal strength.

SOLUTION TO PROBLEM

An optical interferometric range sensor according to one aspect of the present invention includes the features of claim 1.

In this aspect, the split ratio of each of the optical couplers in the multiple stages is set at least based on the first split ratio for the corresponding interferometer and the product of the first split ratio and the second split ratio of the optical coupler in the subsequent stage. This relationship allows appropriate adjustment of the signal strengths of the light receiving signals received by the light receiver that depends on the relationship between these split ratios. This reduces variations in the signal strengths of the light receiving signals received by the light receiver. This allows the distance to the measurement target to be measured appropriately, improving the measurement accuracy.

In the above aspect, the first split ratio of each of the optical couplers in the plurality of stages may be set to 0.5 to 2 times the product of the first split ratio and the second split ratio of the optical coupler in the subsequent stage.

In this aspect, the first split ratio of each of the optical couplers in the plurality of stages is set to 0.5 to 2 times the product of the first split ratio and the second split ratio of the optical coupler in the subsequent stage. This allows the signal strengths of the light receiving signals received by the light receiver to be adjusted to be 50% or more relative to one another. This appropriately prevents large variations in the signal strengths of the light receiving signals received the light receiver.

In the above aspect, the first split ratio of each of the optical couplers in the plurality of stages may be set to be substantially equal to the product of the first split ratio and the second split ratio of the optical coupler in the subsequent stage.

In this aspect, the first split ratio of each of the optical couplers in the plurality of stages is set to be substantially equal to the product of the first split ratio and the second split ratio of the optical coupler in the subsequent stage. This allows the signal strengths of the light receiving signals received by the light receiver to be uniform. The uniform signal strengths of the light receiving signals received by the light receiver allow the distance to the measurement target to be measured more appropriately, improving the measurement accuracy.

The optical interferometric range sensor according to the above aspect further includes a reducer that reduces light transmitted from an optical coupler in a preceding stage to an optical coupler in a subsequent stage of the optical couplers in the plurality of stages.

In this aspect, the reducer reduces returning light from the optical coupler in the subsequent stage to the optical coupler in the preceding stage, thus improving the measurement accuracy of the optical interferometric range sensor.

In the above aspect, the reducer may have a predetermined transmittance for light transmitted from an optical coupler in a preceding stage to an optical coupler in a subsequent stage of the optical couplers in the plurality of stages. The first split ratio and the second split ratio of each of the optical couplers in the plurality of stages may be set based on the first split ratio of the optical coupler and a product of the first split ratio of the optical coupler in the subsequent stage, the second split ratio of the optical coupler in the subsequent stage, and the predetermined transmittance for light from the optical coupler to the optical coupler in the subsequent stage.

In this aspect, the first split ratio and the second split ratio of each of the optical couplers in the plurality of stages are set based on the first split ratio of the optical coupler and a product of the first split ratio of the optical coupler in the subsequent stage, the second split ratio of the optical coupler in the subsequent stage, and the predetermined transmittance for light from the optical coupler to the optical coupler in the subsequent stage. This relationship allows appropriate adjustment of the signal strengths of the light receiving signals received by the light receiver that depends on the relationship between these split ratios based on the transmittance of the reducer. This reduces variations in the signal strengths of the light receiving signals received by the light receiver, thus allowing the distance to the measurement target to be measured appropriately and improving the measurement accuracy.

In the above aspect, the first split ratio of each of the optical couplers in the plurality of stages may be set to 0.5 to 2 times the product of the first split ratio of the optical coupler in the subsequent stage, the second split ratio of the optical coupler in the subsequent stage, and the predetermined transmittance for light from the optical coupler to the optical coupler in the subsequent stage.

In this aspect, the first split ratio of each of the optical couplers in the plurality of stages are set to 0.5 to 2 times the product of the first split ratio of the optical coupler in the subsequent stage, the second split ratio of the optical coupler in the subsequent stage, and the predetermined transmittance for light from the optical coupler to the optical coupler in the subsequent stage. This allows the signal strengths of the light receiving signals received by the light receiver to be adjusted to be 50% or more relative to one another based on the transmittance of the reducer. This appropriately prevents large variations in the signal strengths of the light receiving signals received the light receiver.

In the above aspect, the first split ratio of each of the optical couplers in the plurality of stages may be set to be substantially equal to the product of the first split ratio of the optical coupler in the subsequent stage, the second split ratio of the optical coupler in the subsequent stage, and the predetermined transmittance for light from the optical coupler to the optical coupler in the subsequent stage.

In this aspect, the first split ratio of each of the optical couplers in the plurality of stages are set to be substantially equal to the product of the first split ratio of the optical coupler in the subsequent stage, the second split ratio of the optical coupler in the subsequent stage, and the predetermined transmittance for light from the optical coupler to the optical coupler in the subsequent stage. This allows the signal strengths of the light receiving signals received by the light receiver to be uniform based on the transmittance of the reducer. The uniform signal strengths of the light receiving signals received by the light receiver allow the distance to the measurement target to be measured more appropriately, improving the measurement accuracy.

ADVANTAGEOUS EFFECTS

The optical interferometric range sensor according to the above aspects of the present invention can measure a distance with high accuracy with the light receiver receiving, from each of the interferometers, returning light having an appropriate signal strength.

BRIEF DESCRIPTION OF THE DRAWINGS

FIG. 1 is a schematic external view of a displacement sensor 10 according to an embodiment of the present disclosure.
FIG. 2 is a flowchart showing measurement of a measurement target T with the displacement sensor 10 according to the embodiment of the present disclosure.
FIG. 3 is a functional block diagram of a sensor system 1 including the displacement sensor 10 according to the embodiment of the present disclosure.
FIG. 4 is a flowchart showing measurement of the measurement target T with the sensor system 1 including the displacement sensor 10 according to the embodiment of the present disclosure.
FIG. 5A is a diagram describing a basic measurement procedure of the measurement target T with the displacement sensor 10 according to the embodiment of the present disclosure.
FIG. 5B is a diagram describing another basic measurement procedure of the measurement target T with the displacement sensor 10 according to the embodiment of the present disclosure.
FIG. 6A is a schematic perspective view of a sensor head 20.
FIG. 6B is a schematic view of the sensor head 20 showing the internal structure.
FIG. 7 is a block diagram of a controller 30 showing signal processing in the controller 30.
FIG. 8 is a flowchart showing a method for calculating the distance to the measurement target T with a processor 59 in the controller 30.
FIG. 9A is a diagram of conversion of a waveform signal (voltage versus time) to a frequency spectrum (voltage versus frequency).
FIG. 9B is a diagram of conversion of the frequency spectrum (voltage versus frequency) to a distance spectrum (voltage versus distance).
FIG. 9C is a diagram of peak detection based on distance spectra (voltage versus distance) and calculation of distance values corresponding to the respective peaks.
FIG. 10 is a schematic diagram of an optical interferometric range sensor 100 according to a first example.
FIG. 11 is a schematic diagram describing the split ratios of optical couplers 120a to 120c and the light intensity of an optical signal received by each of light receivers 140a to 140c in the optical interferometric range sensor 100 in one specific example.

FIG. 12 is a schematic diagram of an optical interferometric range sensor 200 according to a first embodiment of the present invention.

FIG. 13 is a schematic diagram describing the split ratios of optical couplers 120a to 120c and the light intensity of an optical signal received by each of light receivers 140a to 140c in the optical interferometric range sensor 200 according to the invention.

FIG. 14 is a schematic diagram of an optical interferometric range sensor 300 including two multichannel heads.

FIGs. 15A, 15B, and 15C are diagrams of interferometers that generate interference light using measurement light and reference light in modifications.

DETAILED DESCRIPTION

Embodiments of the present invention will now be described specifically with reference to the accompanying drawings. The embodiments described below are merely illustrative for implementing the present invention and are not to be construed as limiting the invention. To facilitate understanding, the same reference numerals denote the same components in the drawings, and such components will not be described repeatedly.

Overview of Displacement Sensor

An overview of a displacement sensor according to an embodiment of the present disclosure will be described first.

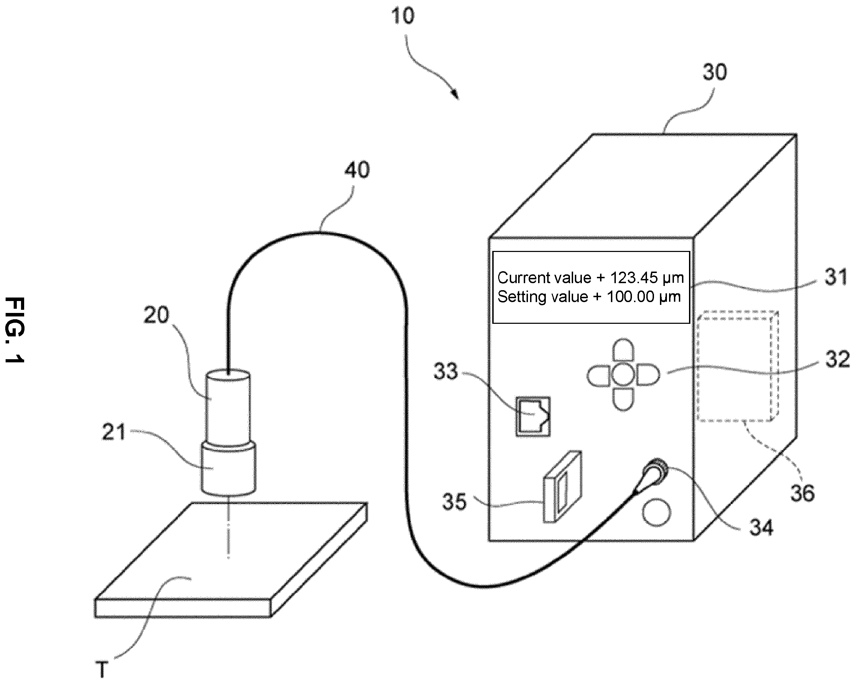

FIG. 1 is a schematic external view of a displacement sensor 10 according to the embodiment of the present disclosure. As shown in FIG. 1, the displacement sensor 10 includes a sensor head 20 and a controller 30 to measure the displacement of a measurement target T (distance to the measurement target T).

The sensor head 20 and the controller 30 are connected with an optical fiber 40. An objective lens 21 is attached to the sensor head 20. The controller 30 includes a display 31, a setting unit 32, an external interface (I/F) 33, an optical fiber connector 34, an external storage 35, and an internal measurement processor 36.

The sensor head 20 irradiates the measurement target T with light output from the controller 30 and receives reflected light from the measurement target T. The sensor head 20 includes a reference surface inside that reflects light output from the controller 30 and received through the optical fiber 40 and causes such light to interfere with the reflected light from the measurement target T described above.

The objective lens 21 attached to the sensor head 20 is detachable. The objective lens 21 is replaceable with another objective lens having a focal length appropriate for the distance between the sensor head 20 and the measurement target T, or is a variable-focus objective lens.

The sensor head 20, the measurement target T, or both may be positioned to have the measurement target T appropriately being within the measurement area of the displacement sensor 10 by irradiating the measurement target T with guide light (visible light).

The optical fiber 40 is connected to the optical fiber connector 34 on the controller 30 and extends to connect the controller 30 and the sensor head 20. The optical fiber 40 thus guides light emitted from the controller 30 to the sensor head 20 and returning light from the sensor head 20 to the controller 30. The optical fiber 40 is detachable from the sensor head 20 and the controller 30. The optical fiber may have any length, thickness, and characteristics.

The display 31 is, for example, a liquid crystal display or an organic electroluminescent (EL) display. The display 31 displays the setting values of the displacement sensor 10, the amount of returning light received from the sensor head 20, and measurement results measured by the displacement sensor 10, such as the displacement of the measurement target T (distance to the measurement target T).

The setting unit 32 receives settings associated with measurement of the measurement target T through user operations performed on mechanical buttons or a touchscreen. All or some of the associated settings may be preset or set through an external connection device (not shown) connected to the external I/F 33. The external connection device may be connected with a wire or wirelessly through a network.

The external I/F 33 includes, for example, Ethernet (registered trademark), Recommended Standard (RS) 232C, and analog output. The external I/F 33 may be connected to an external connection device to allow the associated settings to be input through the external connection device or to output, for example, measurement results measured by the displacement sensor 10 to the external connection device.

The controller 30 may import data stored in the external storage 35 to perform the settings associated with measurement of the measurement target T. The external storage 35 is, for example, an auxiliary storage, such as a universal serial bus (USB) memory, which prestores settings associated with measurement of the measurement target T.

The measurement processor 36 in the controller 30 includes, for example, a wavelength swept light source that emits light with continuously changing wavelengths, a light receiving element that receives returning light from the sensor head 20 to convert the received light to an electric signal, and a signal processing circuit that processes the electric signal. The measurement processor 36 performs various processes using, for example, a controller and a storage to calculate the displacement of the measurement target T (distance to the measurement target T) based on the returning light from the sensor head 20. These processes will be described in detail later.

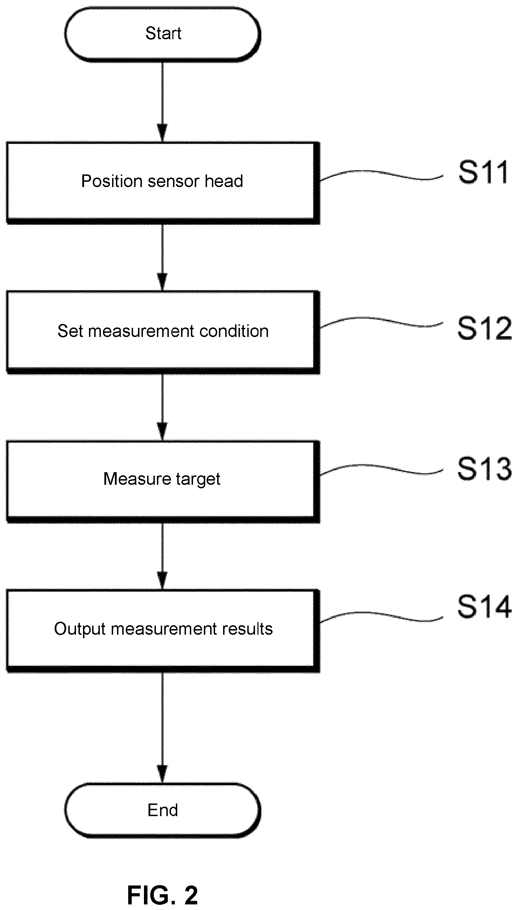

FIG. 2 is a flowchart showing measurement of the measurement target T with the displacement sensor 10 according to the embodiment of the present disclosure. As shown in FIG. 2, this procedure includes steps S11 to S14.

In step S11, the sensor head 20 is positioned. For example, the sensor head 20 irradiates the measurement target T with guide light, which is used as a reference to position the sensor head 20 appropriately.

More specifically, the display 31 in the controller 30 may display the amount of returning light from the sensor head 20. The user may refer to the amount of returning light to adjust, for example, the orientation of the sensor head 20 and the distance (position in height) from the measurement target T. Typically, when the sensor head 20 irradiates the measurement target T perpendicularly (at angles closer to 90 degrees), more light is reflected from the measurement target T, and more returning light is received from the sensor head 20.

The objective lens 21 may be replaced with another objective lens having a focal length appropriate for the distance between the sensor head 20 and the measurement target T.

When settings appropriate for measuring the measurement target T are not possible (e.g., the amount of light appropriate for measurement is not received, or the focal length of the objective lens 21 is inappropriate), a message indicating an error or incomplete settings may be displayed on the display 31 or output to the external connection device for the user.

In step S12, various measurement conditions are set to measure the measurement target T. For example, the user sets unique calibration data (e.g., a function to correct linearity) for the sensor head 20 by operating the setting unit 32 in the controller 30.

Various parameters may also be set. For example, the sampling time, the measurement area, and the threshold for determining whether the measurement result is normal or abnormal are set. The measurement cycle may also be set based on the characteristics of the measurement target T such as the reflectance and the material of the measurement target T. The measurement mode may be set based on the material of the measurement target T.

These measurement conditions and various parameters are set by operating the setting unit 32 in the controller 30, but may also be set through an external connection device or by importing data from the external storage 35.

In step S13, the sensor head 20 positioned in step S11 measures the measurement target T in accordance with the measurement conditions and various parameters set in step S12.

More specifically, in the measurement processor 36 included in the controller 30, the wavelength swept light source emits light, the light receiving element receives returning light from the sensor head 20, and the signal processing circuit performs, for example, frequency analysis, distance conversion, and peak detection to calculate the displacement of the measurement target T (distance to the measurement target T). The measurement will be specifically described in detail later.

In step S14, the results of the measurement performed in step S13 are output. For example, the displacement of the measurement target T (distance to the measurement target T) measured in step S13 and other information are displayed on the display 31 in the controller 30 or output to the external connection device.

The measurement result displayed or output may also include whether the displacement of the measurement target T (distance to the measurement target T) measured in step S13 is within a normal range or is abnormal based on the threshold set in step S12. The measurement conditions, the parameters, and the measurement mode set in step S12 may also be displayed or output together.

Overview of System Including Displacement Sensor

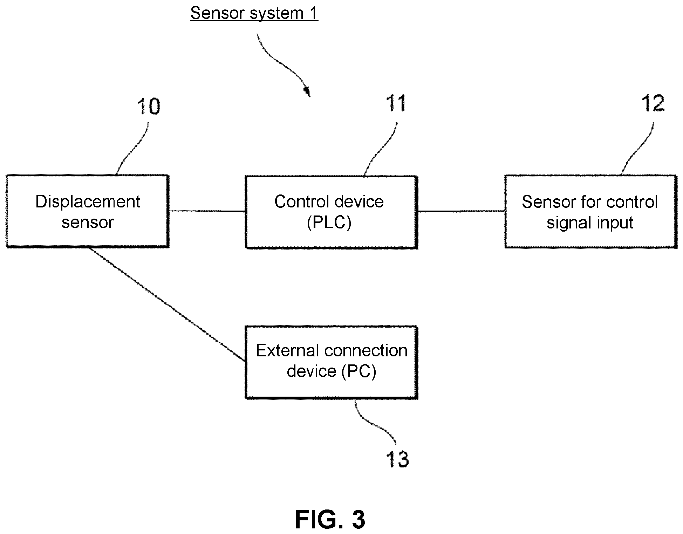

FIG. 3 is a functional block diagram of a sensor system 1 including the displacement sensor 10 according to the embodiment of the present disclosure. As shown in FIG. 3, the sensor system 1 includes the displacement sensor 10, a control device 11, a sensor 12 for control signal input, and an external connection device 13. The displacement sensor 10 is connected to the control device 11 and the external connection device 13 with, for example, a communication cable or an external connection cord (e.g., an external input line, an external output line, or a power line). The control device 11 and the sensor 12 for control signal input are connected with a signal line.

The displacement sensor 10 measures the displacement of the measurement target T (distance to the measurement target T) as described with reference to FIGs. 1 and 2. The displacement sensor 10 may then output the measurement results and other information to the control device 11 and the external connection device 13.

The control device 11 is, for example, a programmable logic controller (PLC), which provides various instructions to the displacement sensor 10 measuring the measurement target T.

For example, the control device 11 may output a measurement time signal to the displacement sensor 10 based on an input signal from the sensor 12 for control signal input connected to the control device 11 or may output, for example, a zero reset command signal (a signal to set the current measurement value to zero) to the displacement sensor 10.

The sensor 12 for control signal input outputs an on-signal or an off-signal to the control device 11 to indicate the time for the displacement sensor 10 to measure the measurement target T. For example, the sensor 12 for control signal input is installed near the production line carrying the measurement target T to output the on- or off-signal to the control device 11 upon detecting the measurement target T moved to a predetermined position.

The external connection device 13 is, for example, a personal computer (PC), which is operable by the user to perform various settings with the displacement sensor 10.

In an example, a measurement mode, an operation mode, a measurement cycle, and the material of the measurement target T are set.

The measurement mode is selectively set to, for example, an internal synchronous measurement mode in which measurement starts periodically in the control device 11 or to an external synchronous measurement mode in which measurement starts in response to an input signal from outside the control device 11.

The operation mode is selectively set to, for example, an in-operation mode in which the measurement target T is actually measured or to an adjustment mode in which the measurement conditions are set for measuring the measurement target T.

The measurement cycle for measuring the measurement target T is set based on the reflectance of the measurement target T. For any measurement target T with low reflectance, a longer measurement cycle may be set as appropriate to allow appropriate measurement of the measurement target T.

For example, a rough surface mode is selected for a measurement target T reflecting light containing a relatively large amount of diffuse reflection component. A specular surface mode is selected for a measurement target T reflecting light containing a relatively large amount of specular reflection component. A standard mode is selected for a measurement target T reflecting light containing about a half diffuse reflection component and a half specular reflection component.

Appropriate mode setting based on the reflectance and the material of the measurement target T allows more accurate measurement of the measurement target T.

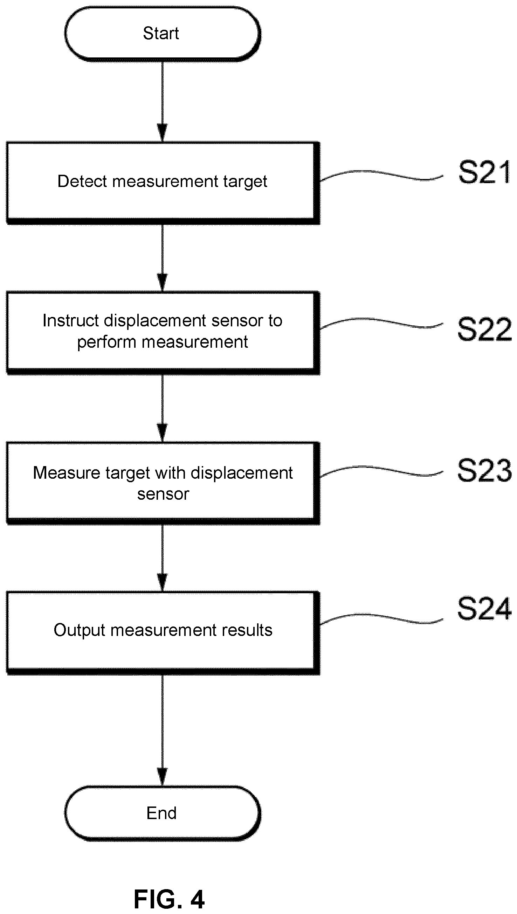

FIG. 4 is a flowchart showing measurement of the measurement target T with the sensor system 1 including the displacement sensor 10 according to the embodiment of the present disclosure. As shown in FIG. 4, this procedure is performed in the external synchronous measurement mode and includes steps S21 to S24.

In step S21, the sensor system 1 detects a measurement target T, which is an object to be measured. More specifically, the sensor 12 for control signal input detects the measurement target T moved to a predetermined position on the production line.

In step S22, the sensor system 1 instructs the displacement sensor 10 to measure the measurement target T detected in step S21. More specifically, the sensor 12 for control signal input outputs an on-signal or an off-signal to the control device 11 to indicate the time to measure the measurement target T detected in step S21. The control device 11 outputs a measurement time signal to the displacement sensor 10 in response to the on- or off-signal to instruct the displacement sensor 10 to measure the measurement target T.

In step S23, the displacement sensor 10 measures the measurement target T. More specifically, the displacement sensor 10 measures the measurement target T in response to the measurement instruction received in step S22.

In step S24, the sensor system 1 outputs measurement results obtained in step S23. More specifically, the displacement sensor 10 causes the display 31 to display the measurement results or outputs the results to, for example, the control device 11 or the external connection device 13 through the external I/F 33.

Although the procedure described above with reference to FIG. 4 is performed in the external synchronous measurement mode in which the measurement target T is measured in response to the sensor 12 for control signal input detecting the measurement target T, the measurement may be performed with a procedure in any mode. For example, in the internal synchronous measurement mode, the processing in steps S21 and S22 may be replaced with generation of a measurement time signal in preset cycles to instruct the displacement sensor 10 to measure the measurement target T.

A basic measurement procedure of the measurement target T with the displacement sensor 10 according to the embodiment of the present disclosure will now be described.

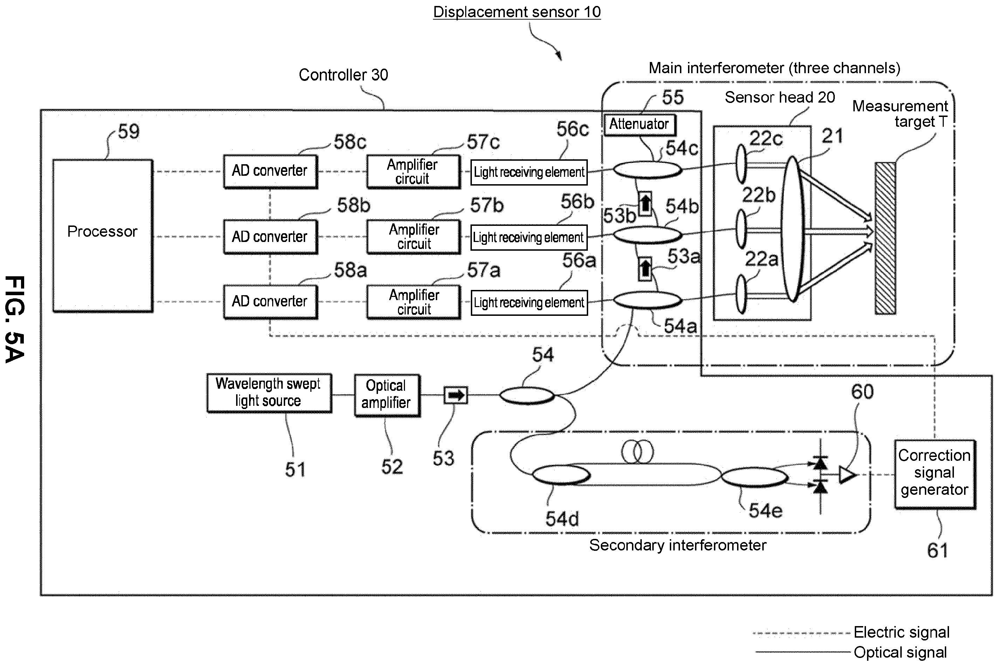

FIG. 5A is a diagram describing a basic measurement procedure of the measurement target T with the displacement sensor 10 according to the embodiment of the present disclosure. As shown in FIG. 5A, the displacement sensor 10 includes the sensor head 20 and the controller 30. The sensor head 20 includes the objective lens 21 and multiple collimating lenses 22a to 22c. The controller 30 includes a wavelength swept light source 51, an optical amplifier 52, multiple isolators 53, 53a, and 53b, multiple optical couplers 54 and 54a to 54e, an attenuator 55, multiple light receiving elements (e.g., photodetectors, or PDs) 56a to 56c, multiple amplifier circuits 57a to 57c, multiple analog-to-digital (AD) converters 58a to 58c, a processor 59, a balance detector 60, and a correction signal generator 61.

The wavelength swept light source 51 emits a laser beam with a swept wavelength. The wavelength swept light source 51 may be, for example, a vertical-cavity surface-emitting laser (VCSEL) modulated with an electric current. Such a wavelength swept light source 51 with a short cavity length is less likely to cause mode hopping and facilitates wavelength changes at low cost.

The optical amplifier 52 amplifies light emitted from the wavelength swept light source 51. The optical amplifier 52 may be, for example, an erbium-doped fiber amplifier (EDFA) for light with 1550 nm.

The isolator 53 is an optical element that transmits incident light in one direction. The isolator 53 may be located immediately downstream from the wavelength swept light source 51 to reduce returning light affecting the measurement as noise.

Light emitted from the wavelength swept light source 51 is amplified by the optical amplifier 52, travels through the isolator 53, and is split by the optical coupler 54 and incident on a main interferometer and a secondary interferometer. For example, the optical coupler 54 may split the light to be incident on the main interferometer and the secondary interferometer at a ratio of 90:10 to 99:1.

The light split and incident on the main interferometer is further split by the first-stage optical coupler 54a into light toward the sensor head 20 and light toward the second-stage optical coupler 54b.

The light split toward the sensor head 20 by the first-stage optical coupler 54a travels across the sensor head 20 from the end of the optical fiber through the collimating lens 22a and the objective lens 21 to the measurement target T. The end (end face) of the optical fiber serves as the reference surface. The light reflected from the reference surface and the light reflected from the measurement target T interfere with each other to form interference light, which returns to the first-stage optical coupler 54a and is received by the light receiving element 56a for conversion to an electric signal.

The light split by the first-stage optical coupler 54a toward the second-stage optical coupler 54b enters the second-stage optical coupler 54b through the isolator 53a, and is further split by the second-stage optical coupler 54b into light toward the sensor head 20 and light toward the third-stage optical coupler 54c. The light directed by the optical coupler 54b to the sensor head 20 travels across the sensor head 20 from the end of the optical fiber through the collimating lens 22b and the objective lens 21 to the measurement target T in the same manner as in the first stage. The end (end face) of the optical fiber serves as the reference surface. The light reflected from the reference surface and the light reflected from the measurement target T interfere with each other to form interference light, which returns to the second-stage optical coupler 54b and is split by the optical coupler 54b into light toward the isolator 53a and light toward the light receiving element 56b. The light directed by the optical coupler 54b to the light receiving element 56b is received by the light receiving element 56b and converted to an electric signal. The isolator 53a transmits light from the optical coupler 54a in the preceding stage to the optical coupler 54b in the subsequent stage, but blocks light from the optical coupler 54b in the subsequent stage to the optical coupler 54a in the preceding stage. The light directed by the optical coupler 54b to the isolator 53a is thus blocked.

The light split toward the third-stage optical coupler 54c by the second-stage optical coupler 54b enters the third-stage optical coupler 54c through the isolator 53b, and is further split by the third-stage optical coupler 54c into light toward the sensor head 20 and light toward the attenuator 55. The light directed by the optical coupler 54c to the sensor head 20 travels across the sensor head 20 from the end of the optical fiber through the collimating lens 22c and the objective lens 21 to the measurement target T in the same manner as in the first and second stages. The end (end face) of the optical fiber serves as the reference surface. The light reflected from the reference surface and the light reflected from the measurement target T interfere with each other to form interference light, which returns to the third-stage optical coupler 54c and is split by the optical coupler 54c into light toward the isolator 53b and light toward the light receiving element 56c. The light directed by the optical coupler 54c to the light receiving element 56c is received by the light receiving element 56c and converted to an electric signal. The isolator 53b transmits light from the optical coupler 54b in the preceding stage to the optical coupler 54c in the subsequent stage, but blocks light from the optical coupler 54c in the subsequent stage to the optical coupler 54b in the preceding stage. The light directed by the optical coupler 54c to the isolator 53b is thus blocked.

The light directed by the third-stage optical coupler 54c in the direction other than to the sensor head 20 is not used in the measurement of the measurement target T. Such light may thus be attenuated by the attenuator 55 such as a terminator to avoid returning back by reflection.

As described above, the main interferometer includes three stages of optical paths (three channels) each with an optical path length difference being twice (round trip) the distance from the end (end face) of the optical fiber connected to the sensor head 20 to the measurement target T, thus generating three beams of interference light corresponding to the respective optical path length differences.

The light receiving elements 56a to 56c receive interference light from the main interferometer as described above and generate electric signals corresponding to the amounts of received light.

The amplifier circuits 57a to 57c amplify the electric signals output from the respective light receiving elements 56a to 56c.

The AD converters 58a to 58c receive the electric signals amplified by the respective amplifier circuits 57a to 57c and convert the electric signals from analog signals to digital signals (AD conversion). The AD converters 58a to 58c perform AD conversion based on a correction signal from the correction signal generator 61 in the secondary interferometer.

The secondary interferometer obtains an interference signal in the secondary interferometer and generates the correction signal, referred to as a K clock, to correct nonlinearity in the swept wavelength of the wavelength swept light source 51.

More specifically, the light split by the optical coupler 54 and incident on the secondary interferometer is further split by the optical coupler 54d. The optical paths for the resultant light beams can have different lengths with the use of, for example, optical fibers having different lengths extending between the optical coupler 54d and the optical coupler 54e, thus outputting interference light corresponding to the optical path length difference from the optical coupler 54e. The balance detector 60 receives the interference light from the optical coupler 54e and amplifies the optical signal while removing noise as the difference from the signal having a phase inverted from the phase of the interference light to convert the optical signal to an electric signal.

Each of the optical coupler 54d and the optical coupler 54e may split the light at a ratio of 50:50.

The correction signal generator 61 determines, based on the electric signal from the balance detector 60, the nonlinearity in the swept wavelength of the wavelength swept light source 51 and generates a K clock corresponding to the nonlinearity for output to the AD converters 58a to 58c.

The nonlinearity in the swept wavelength of the wavelength swept light source 51 indicates that the waves of the analog signals input into the AD converters 58a to 58c in the main interferometer occur at unequal intervals. The AD converters 58a to 58c perform AD conversion (sampling) by correcting the sampling time based on the K clock described above to cause the waves at equal intervals.

As described above, the K clock is a correction signal for sampling the analog signal in the main interferometer. The K clock is thus to be generated to have a higher frequency than the analog signal in the main interferometer. More specifically, the length difference between the optical paths extending between the optical coupler 54d and the optical coupler 54e in the secondary interferometer may be designed longer than the optical path length difference corresponding to the distance between the end (end face) of the optical fiber and the measurement target T in the main interferometer, or the frequency of the K clock may be multiplied (e.g., by eight times) to a higher frequency by the correction signal generator 61.

The processor 59 obtains digital signals converted from analog signals by the AD converter 58a to 58c with the nonlinearity being corrected, and calculates the displacement of the measurement target T (distance to the measurement target T) based on the digital signals. More specifically, the processor 59 converts the digital signals to a frequency spectrum using a fast Fourier transform (FFT) and analyzes the resultant frequencies to calculate the distance. The processing performed by the processor 59 will be described in detail later.

The processor 59, which is to perform high speed processing, is often implemented with an integrated circuit such as a field-programmable gate array (FPGA).

In the present embodiment, the main interferometer includes three stages of optical paths (multiple channels), with the sensor head 20 emitting measurement light along the light paths to the measurement target T. The interference light (returning light) obtained through each light path is used to measure, for example, the distance to the measurement target T. The main interferometer may include any number of channels other than three channels, such as one, two, or four or more channels.

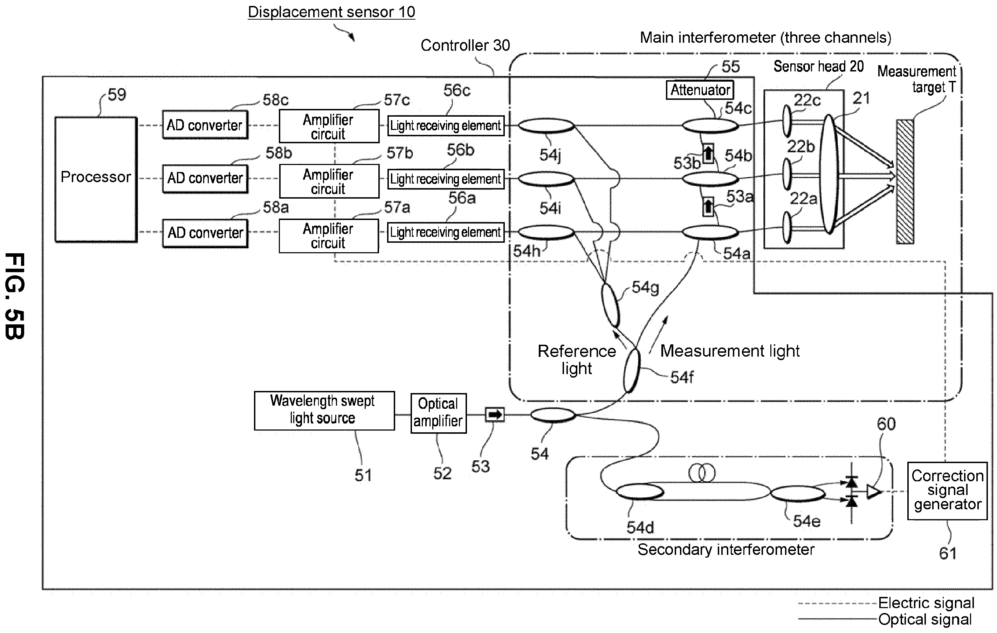

FIG. 5B is a diagram describing another basic measurement procedure of the measurement target T with the displacement sensor 10 according to the embodiment of the present disclosure. As shown in FIG. 5B, the displacement sensor 10 includes the sensor head 20 and the controller 30. The sensor head 20 includes the objective lens 21 and the multiple collimating lenses 22a to 22c. The controller 30 includes the wavelength swept light source 51, the optical amplifier 52, the multiple isolators 53, 53a, and 53b, multiple optical couplers 54 and 54a to 54j, the attenuator 55, the multiple light receiving elements (e.g., PDs) 56a to 56c, the multiple amplifier circuits 57a to 57c, the multiple AD converters 58a to 58c, the processor 59, the balance detector 60, and the correction signal generator 61. The displacement sensor 10 shown in FIG. 5B differs from the displacement sensor 10 shown in FIG. 5A mainly in including the optical couplers 54f to 54j. The basic procedure of this structure will be described in detail by focusing on its differences from the structure shown in FIG. 5A.

Light emitted from the wavelength swept light source 51 is amplified by the optical amplifier 52, travels through the isolator 53, and is split by the optical coupler 54 into light toward the main interferometer and light toward the secondary interferometer. The light split toward the main interferometer is further split by the optical coupler 54f to serve as measurement light and reference light.

As described with reference to FIG. 5A, the measurement light is directed by the first-stage optical coupler 54a to travel through the collimating lens 22a and the objective lens 21 to the measurement target T and is reflected from the measurement target T. In the structure in FIG. 5A, the light reflected from the end (end face) of the optical fiber serving as the reference surface and the light reflected from the measurement target T interfere with each other to form interference light. In the structure in FIG. 5B, the reference surface to reflect light is eliminated. In other words, in the structure in FIG. 5B, no light is reflected from the reference surface unlike in FIG. 5A, and thus the measurement light reflected from the measurement target T returns to the first-stage optical coupler 54a.

Similarly, the light directed by the first-stage optical coupler 54a to the second-stage optical coupler 54b enters the second-stage optical coupler 54b, which directs a portion of light to travel through the collimating lens 22b and the objective lens 21 to the measurement target T. The light is then reflected from the measurement target T to return to the second-stage optical coupler 54b. The light directed by the second-stage optical coupler 54b to the third-stage optical coupler 54c enters the third-stage optical coupler 54c, which directs a portion of the light to travel through the collimating lens 22c and the objective lens 21 to the measurement target T. The light is then reflected from the measurement target T to return to the third-stage optical coupler 54c.

The reference light resulting from the split performed by the optical coupler 54f is further split by the optical coupler 54g to be incident on the optical couplers 54h, 54i, and 54j.

In the optical coupler 54h, the measurement light reflected from the measurement target T and output from the optical coupler 54a and the reference light output from the optical coupler 54g interfere with each other to form interference light, which is received by the light receiving element 56a and converted to an electric signal. In other words, the light split by the optical coupler 54f to serve as the measurement light and the reference light forms interference light corresponding to the length difference between the optical path for the measurement light (from the optical coupler 54f through the optical coupler 54a, the collimating lens 22a, and the objective lens 21 to the measurement target T and back to the optical coupler 54h) and the optical path for the reference light (from the optical coupler 54f through the optical coupler 54g to the optical coupler 54h). The interference light is received by the light receiving element 56a and converted to an electric signal.

Similarly, in the optical coupler 54i, interference light is formed to correspond to the length difference between the optical path for the measurement light (from the optical coupler 54f through the optical couplers 54a and 54b, the collimating lens 22b, and the objective lens 21 to the measurement target T and back to the optical coupler 54i) and the optical path for the reference light (from the optical coupler 54f through the optical coupler 54g to the optical coupler 54i). The interference light is received by the light receiving element 56b and converted to an electric signal.

In the optical coupler 54j, interference light is formed to correspond to the length difference between the optical path for the measurement light (from the optical coupler 54f through the optical couplers 54a, 54b, and 54c, the collimating lens 22c, and the objective lens 21 to the measurement target T, and back to the optical coupler 54j) and the optical path for the reference light (from the optical coupler 54f through the optical coupler 54g to the optical coupler 54j). The interference light is received by the light receiving element 56c and converted to an electric signal. The light receiving elements 56a to 56c may be, for example, balance PDs.

As described above, the main interferometer includes three stages of optical paths (three channels) to generate three beams of interference light each corresponding to the length difference between the optical path for the measurement light reflected from the measurement target T and input into the optical coupler 54h, 54i, or 54j and the optical path for the reference light input through the optical couplers 54f and 54g into the optical coupler 54h, 54i, or 54j.

The length difference between the optical path for the measurement light and the optical path for the reference light may be set to differ in each of the three channels with, for example, the optical path length differing between the optical coupler 54g and each of the optical couplers 54h, 54i, and 54j.

The interference light obtained through each of the optical paths (multiple channels) is used to measure, for example, the distance to the measurement target T.

Sensor Head Structure

The structure of the sensor head used in the displacement sensor 10 will now be described.

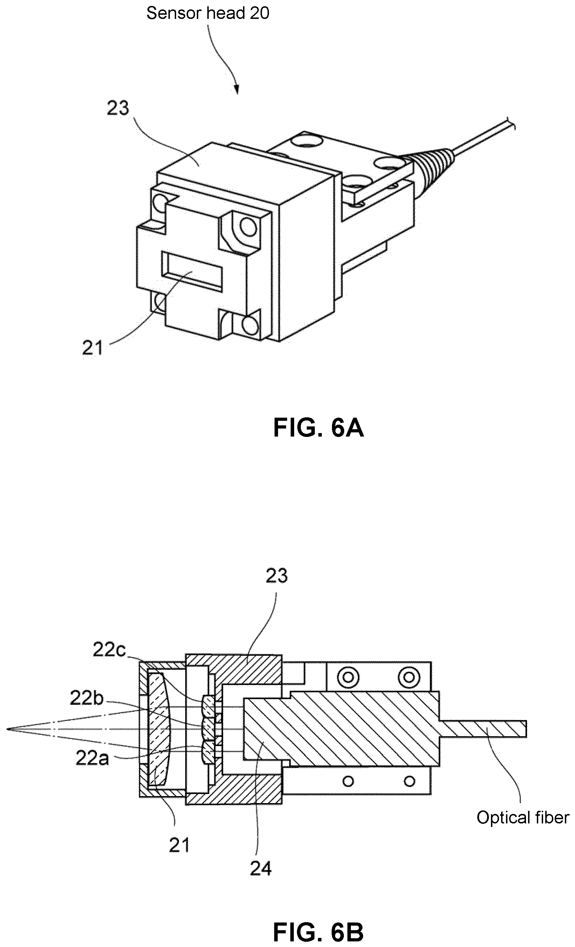

FIG. 6A is a schematic perspective view of the sensor head 20. FIG. 6B is a schematic view of the sensor head showing the internal structure.

As shown in FIG. 6A, the sensor head 20 includes a lens holder 23 holding the objective lens 21 and collimating lenses. For example, the size of the lens holder 23 is about 20 mm on one side surrounding the objective lens 21 and about 40 mm in length in the optical axis direction.

As shown in FIG. 6B, the lens holder 23 holds one objective lens 21 and three collimating lenses 22a to 22c. Light from the optical fiber is guided through an optical fiber array 24 to the three collimating lenses 22a to 22c. The light through the three collimating lenses 22a to 22c reaches the measurement target T through the objective lens 21.

The optical fiber, the collimating lenses 22a to 22c, and the optical fiber array 24 are held by the lens holder 23 together with the objective lens 21, thus together serving as the sensor head 20.

The lens holder 23 in the sensor head 20 may be formed from a metal (e.g., A2017), which has high strength and is machinable with high precision.

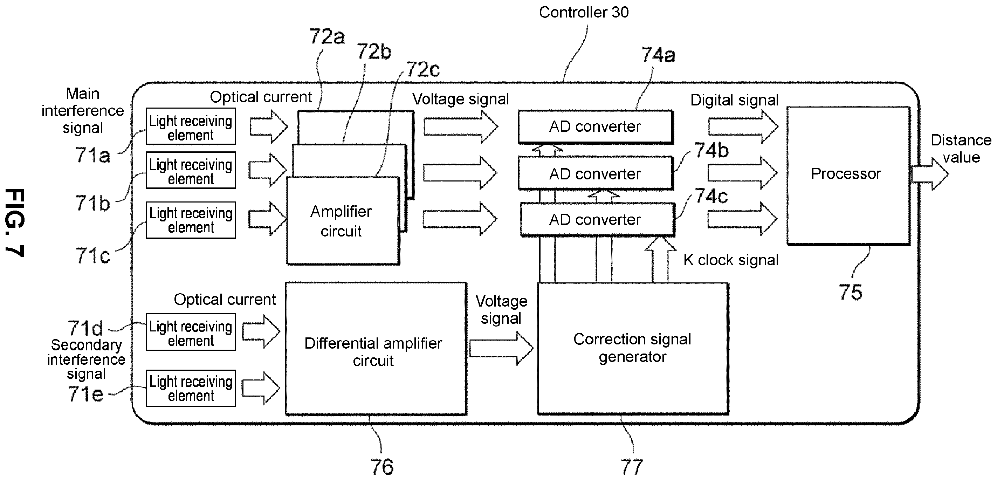

FIG. 7 is a block diagram of the controller 30 showing signal processing in the controller 30. As shown in FIG. 7, the controller 30 includes multiple light receiving elements 71a to 71e, multiple amplifier circuits 72a to 72c, multiple AD converters 74a to 74c, a processor 75, a differential amplifier circuit 76, and a correction signal generator 77.

As shown in FIG. 5A, the controller 30 splits, with the optical coupler 54, light emitted from the wavelength swept light source 51 into light to be incident on the main interferometer and light to be incident on the secondary interferometer and processes a main interference signal obtained from the main interferometer and a secondary interference signal obtained from the secondary interferometer to calculate a distance value to the measurement target T.

The multiple light receiving elements 71a to 71c correspond to the light receiving elements 56a to 56c shown in FIG. 5A. The light receiving elements 71a to 71c receive main interference signals from the main interferometer to output the signals to the respective amplifier circuits 72a to 72c as current signals.

The amplifier circuits 72a to 72c convert the current signals to voltage signals (I-V conversion) and amplify the resultant signals.

The AD converters 74a to 74c correspond to the AD converters 58a to 58c shown in FIG. 5A. The AD converters 74a to 74c convert the voltage signals to digital signals (AD conversion) based on the K clock from the correction signal generator 77 (described later).

The processor 75 corresponds to the processor 59 shown in FIG. 5A. The processor 75 converts the digital signals from the AD converters 74a to 74c to a frequency spectrum using an FFT and analyzes the frequencies to calculate the distance value to the measurement target T.

The light receiving elements 71d and 71e and the differential amplifier circuit 76 correspond to the balance detector 60 shown in FIG. 5A. The light receiving elements 71d and 71e each receive interference light from the secondary interferometer. One of the light receiving elements 71d and 71e outputs an interference signal with the phase being inverted. The differential amplifier circuit 76 amplifies the interference light while removing noise as the difference between the two signals and converts the signal to a voltage signal.

The correction signal generator 77 corresponds to the correction signal generator 61 shown in FIG. 5A. The correction signal generator 77 binarizes the voltage signal with a comparator, generates a K clock, and outputs the K clock to the AD converters 74a to 74c. The K clock is to be generated with a higher frequency than the frequency of the analog signal in the main interferometer. The frequency of the K clock may by multiplied (e.g., by eight times) to a higher frequency by the correction signal generator 77.

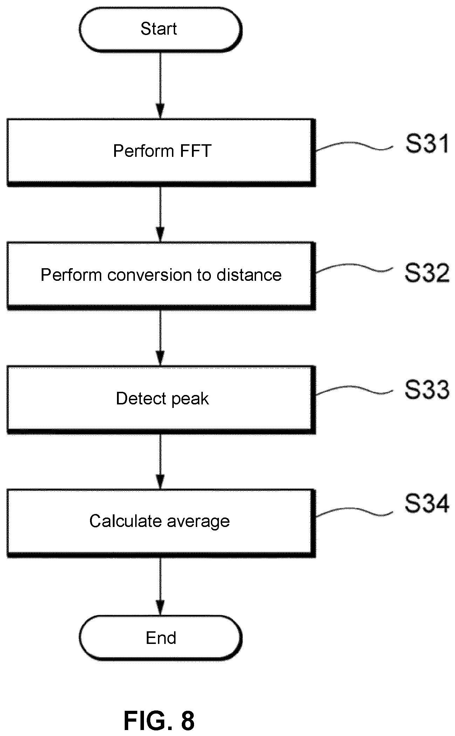

FIG. 8 is a flowchart showing a method for calculating the distance to the measurement target T with the processor 59 in the controller 30. As shown in FIG. 8, the method includes steps S31 to S34.

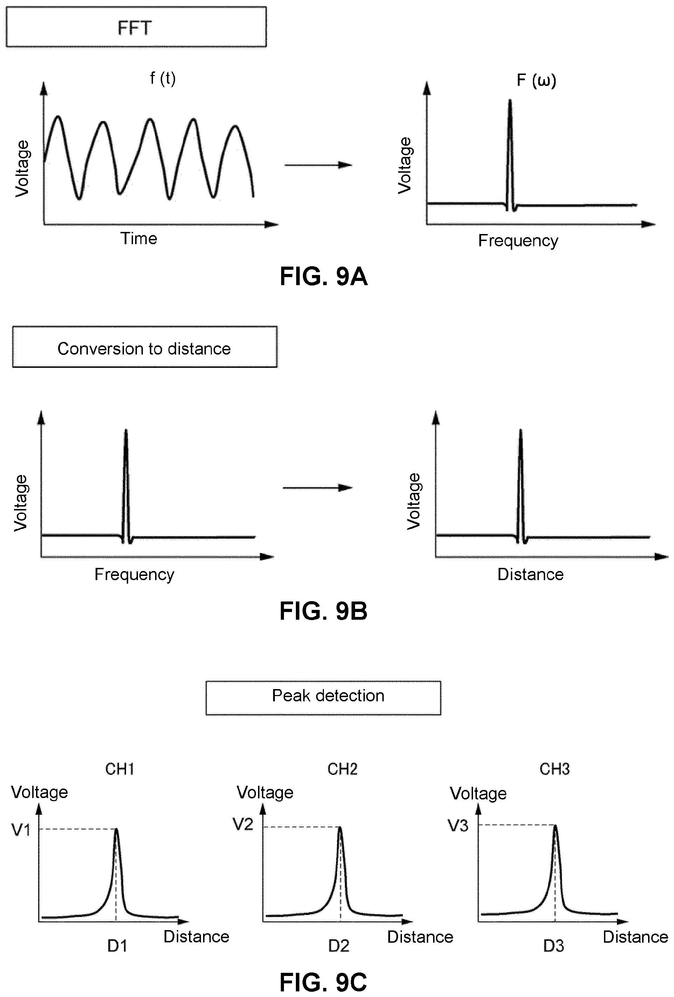

In step S31, the processor 59 converts the waveform signal (voltage versus time) to a frequency spectrum (voltage versus frequency) using the FFT below. FIG. 9A is a diagram of conversion of the waveform signal (voltage versus time) to a frequency spectrum (voltage versus frequency).

$$\sum_{t=0}^{N-1} f(t) exp\left(-\mathrm{i}\frac{2\pi\omega t}{N}\right) = F(\omega) \tag{1}$$

In the above formula, N is the number of data points.

In step S32, the processor 59 converts the frequency spectrum (voltage versus frequency) to a distance spectrum (voltage versus distance). FIG. 9B is a diagram of conversion of the frequency spectrum (voltage versus frequency) to a distance spectrum (voltage versus distance).

In step S33, the processor 59 calculates the distance value corresponding to a peak based on the distance spectrum (voltage versus distance). FIG. 9C is a diagram of peak detection based on distance spectra (voltage versus distance) and calculation of distance values corresponding to the respective peaks. In FIG. 9C, peaks are detected in three channels based on the respective spectra (voltage versus distance) to calculate the distance values corresponding to the respective peaks.

In step S34, the processor 59 calculates an average of the distance values calculated in step S33. More specifically, the processor 59 calculates an average of the distance values calculated from the respective peaks detected based on the spectra (voltage versus distance) in the three channels in step S33. The processor 59 outputs the average of the values as the distance to the measurement target T.

In step S34, the processor 59 may calculate an average of distance values with a signal-to-noise ratio (SNR) greater than or equal to a threshold selected from the distance values calculated in step S33. For example, among the peaks detected in all of the three channels based on the respective spectra (voltage versus distance), any distance value calculated based on a spectrum with a SNR less than the threshold is determined to be less reliable and is not used.

Specific embodiments of the present disclosure will now be described in detail focusing on distinctive components, functions, and characteristics. An optical interferometric range sensor described below corresponds to the displacement sensor 10 described with reference to FIGs. 1 to 9C. All or some of the basic components, functions, and characteristics of the optical interferometric range sensor are the same as the components, functions, and characteristics of the displacement sensor 10 described with reference to FIGs. 1 to 9C.

First Example

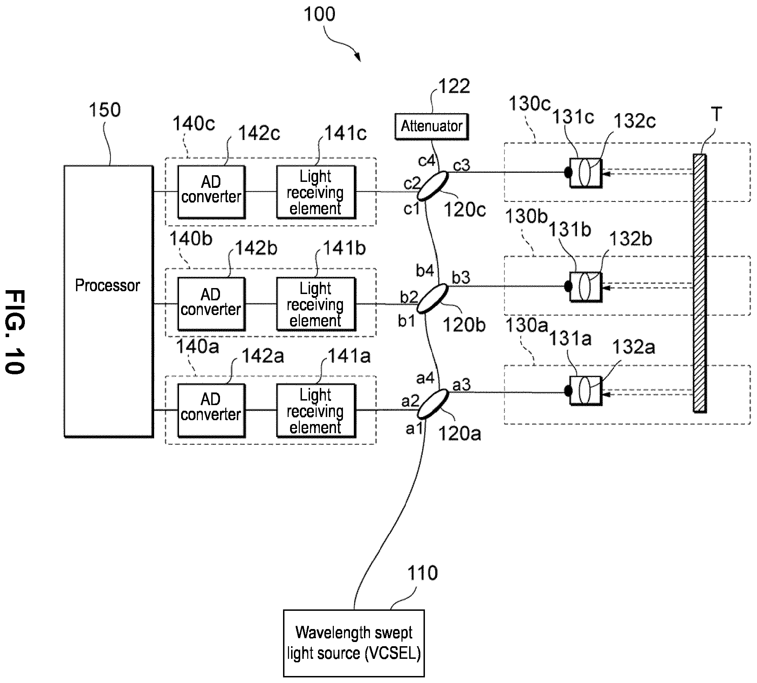

FIG. 10 is a schematic diagram of an optical interferometric range sensor 100 according to a first example, not encompassed by the appended claims. As shown in FIG. 10, the optical interferometric range sensor 100 includes a wavelength swept light source 110, optical couplers 120a to 120c, an attenuator 122, interferometers 130a to 130c, light receivers 140a to 140c, and a processor 150. The optical couplers 120a to 120c may each be simply referred to as an optical coupler 120, unless they are distinguished. The interferometers 130a to 130c may each be simply referred to as an interferometer 130, unless they are distinguished. The light receivers 140a to 140c may each be simply referred to as a light receiver 140, unless they are distinguished. The optical interferometric range sensor 100 shown in FIG. 10 is a multi-stage optical interferometric range sensor, and is a three-stage optical interferometric range sensor including three interferometers in one example. The number of interferometers (specifically, the number of stages) may be two or four or more.

The wavelength swept light source 110 is directly connected to a first port a1 of the optical coupler 120 or indirectly connected to the first port a1 of the optical coupler 120 with other components (e.g., the optical amplifier 52, the isolator 53, and the optical coupler 54). The wavelength swept light source 110 emits light with continuously changing wavelengths. In other words, the wavelength of the light emitted from the wavelength swept light source 110 changes continuously.

The optical couplers 120a to 120c are connected in series with one another in three stages. More specifically, the optical coupler 120a is in the first stage corresponding to the interferometer 130a, the optical coupler 120b is in the second stage corresponding to the interferometer 130b, and the optical coupler 120c is in the third stage corresponding to the interferometer 130c.

Each optical coupler 120 has $2 \times 2$ (four) ports. Light input into one port at one end is output to two ports at the other end at a predetermined split ratio. More specifically, the first-stage optical coupler 120a has the first port a1, a second port a2, a third port a3, and a fourth port a4. Light input into the first port a1 or the second port a2 is output to the third port a3 and the fourth port a4 at a predetermined split ratio. Light input into the third port a3 or the fourth port a4 is output to the first port a1 and the second port a2 at the predetermined ratio.

The second-stage optical coupler 120b has a first port b1, a second port b2, a third port b3, and a fourth port b4. Light input into the first port b1 or the second port b2 is output to the third port b3 and the fourth port b4 at a predetermined split ratio. Light input into the third port b3 or the fourth port b4 is output to the first port b1 and the second port b2 at the predetermined ratio.

The third-stage optical coupler 120c has a first port c1, a second port c2, a third port c3, and a fourth port c4. Light input into the first port c1 or the second port c2 is output to the third port c3 and the fourth port c4 at a predetermined split ratio. Light input into the third port c3 or the fourth port c4 is output to the first port c1 and the second port c2 at the predetermined ratio.

The first port a1 of the first-stage optical coupler 120a is connected to the wavelength swept light source 110. The first port a1 directly or indirectly receives light with continuously changing wavelengths input from the wavelength swept light source 110.

The first-stage optical coupler 120a splits, at a predetermined split ratio, the light input from the wavelength swept light source 110 into the first port a1 to be output to the third port a3 and the fourth port a4. Light output from the third port a3 of the first-stage optical coupler 120a is input into the first-stage interferometer 130a. Light output from the fourth port a4 of the first-stage optical coupler 120a is input into the first port b1 of the second-stage optical coupler 120b.

The second-stage optical coupler 120b splits, at a predetermined split ratio, the light input from the first-stage optical coupler 120a into the first port b1 to be output to the third port b3 and the fourth port b4. Light output from the third port b3 of the second-stage optical coupler 120b is input into the second-stage interferometer 130b. Light output from the fourth port b4 of the second-stage optical coupler 120b is input into the first port c1 of the third-stage optical coupler 120c.

The third-stage optical coupler 120c splits, at a predetermined split ratio, the light input from the second-stage optical coupler 120b into the first port c1 to be output to the third port c3 and the fourth port c4. Light output from the third port c3 of the third-stage optical coupler 120c is input into the third-stage interferometer 130c. Light output from the fourth port c4 of the third-stage optical coupler 120c is input into the attenuator 122.

The interferometer 130a includes a sensor head 131a including an objective lens 132a, the interferometer 130b includes a sensor head 131b including an objective lens 132b, and the interferometer 130c includes a sensor head 131c including an objective lens 132c. The sensor head 131a may include a collimating lens between the end of the optical fiber and the objective lens 132a. The sensor head 131b may include a collimating lens between the end of the optical fiber and the objective lens 132b. The sensor head 131c may include a collimating lens between the end of the optical fiber and the objective lens 132c.

The light input from the third port a3 of the first-stage optical coupler 120a into the first-stage interferometer 130a is input into the sensor head 131a through the optical fiber. A portion of the light input into the sensor head 131a reaches the measurement target T through the objective lens 132a and is reflected from the measurement target T as measurement light. The measurement light reflected from the measurement target T is then collected by the objective lens 132a in the sensor head 131a to be input into the sensor head 131a. Another portion of the light input into the sensor head 131a is reflected from a reference surface at the end of the optical fiber as reference light. The measurement light and the reference light interfere with each other on the reference surface of the sensor head 131a to form first interference light corresponding to the optical path length difference between the measurement light and the reference light. The first interference light is output from the interferometer 130a and input into the third port a3 of the optical coupler 120a.

The light input from the third port b3 of the second-stage optical coupler 120b into the second-stage interferometer 130b is input into the sensor head 131b through the optical fiber. A portion of the light input into the sensor head 131b reaches the measurement target T through the objective lens 132b and is reflected from the measurement target T as measurement light. The measurement light reflected from the measurement target T is then collected by the objective lens 132b in the sensor head 131b to be input into the sensor head 131b. Another portion of the light input into the sensor head 131b is reflected from a reference surface on the end of the optical fiber as reference light. The measurement light and the reference light interfere with each other on the reference surface of the sensor head 131b to form second interference light corresponding to the optical path length difference between the measurement light and the reference light. The second interference light is output from the interferometer 130b and input into the third port b3 of the optical coupler 120b.

The light input from the third port c3 of the third-stage optical coupler 120c into the third-stage interferometer 130c is input into the sensor head 131c through the optical fiber. A portion of the light input into the sensor head 131c reaches the measurement target T through the objective lens 132c and is reflected from the measurement target T as measurement light. The measurement light reflected from the measurement target T is then collected by the objective lens 132c in the sensor head 131c to be input into the sensor head 131c. Another portion of the light input into the sensor head 131c is reflected from a reference surface on the end of the optical fiber as reference light. The measurement light and the reference light interfere with each other on the reference surface of the sensor head 131c to form third interference light corresponding to the optical path length difference between the measurement light and the reference light. The third interference light is output from the interferometer 130c and input into the third port c3 of the optical coupler 120c.

The attenuator 122 attenuates the light input from the fourth port c4 of the optical coupler 120c to reduce reflected light to the optical coupler 120c. The reduced reflected light reduces susceptibility to phase noise. The optical interferometric range sensor 100 can thus measure the distance to the measurement target T with higher accuracy.

The optical element connected to the end of the optical fiber connected to the optical coupler 120c is not limited to the attenuator 122 but may be another optical element. For example, an isolator or a coreless fiber may be connected. For such connection as well, the reflected light to the optical coupler 120c is to be reduced to reduce susceptibility to the phase noise described above. For example, a connector treated with angled physical contact (APC) polishing may be effectively used with a refractive index matching gel. Fusion splicing is more effective.

The light receiver 140a includes a light receiving element 141a and an AD converter 142a. The light receiver 140b includes a light receiving element 141b and an AD converter 142b. The light receiver 140c includes a light receiving element 141c and an AD converter 142c. The light receiving elements 141a to 141c are, for example, PDs. The light receiving element 141a receives light output from the second port a2 of the optical coupler 120a and converts the received light to an electric signal. The light receiving element 141b receives light output from the second port b2 of the optical coupler 120b and converts the received light to an electric signal. The light receiving element 141c receives light output from the second port c2 of the optical coupler 120c and converts the received light to an electric signal. The AD converters 142a to 142c convert the electric signals from analog signals to digital signals.

The light receiver 140a corresponds to the optical coupler 120a and receives light output from the second port a2 of the optical coupler 120a. The light receiver 140b corresponds to the optical coupler 120b and receives light output from the second port b2 of the optical coupler 120b. The light receiver 140c corresponds to the optical coupler 120c and receives light output from the second port c2 of the optical coupler 120c.

As described above, the first interference light generated by the first-stage interferometer 130a is output from the interferometer 130a and input into the third port a3 of the optical coupler 120a. The first-stage optical coupler 120a splits, at a predetermined split ratio, the first interference light input into the third port a3 to be output to the first port a1 and the second port a2. The light receiver 140a receives light output from the second port a2 of the optical coupler 120a, generates a digital signal based on the received light, and provides the digital signal to the processor 150.

As described above, the second interference light generated by the second-stage interferometer 130b is output from the interferometer 130b and input into the third port b3 of the optical coupler 120b. The second-stage optical coupler 120b splits, at a predetermined split ratio, the second interference light input into the third port b3 to be output to the first port b1 and the second port b2. The light receiver 140b receives light output from the second port b2 of the optical coupler 120b, generates a digital signal based on the received light, and provides the digital signal to the processor 150.

As described above, the third interference light generated by the third-stage interferometer 130c is output from the interferometer 130c and input into the third port c3 of the optical coupler 120c. The third-stage optical coupler 120c splits, at a predetermined split ratio, the third interference light input into the third port c3 to be output to the first port c1 and the second port c2. The light receiver 140c receives light output from the second port c2 of the optical coupler 120c, generates a digital signal based on the received light, and provides the digital signal to the processor 150.

The processor 150 calculates the distance to the measurement target T based on the digital signals resulting from conversion performed by the light receivers 140a to 140c. For example, the processor 150 includes an integrated circuit such as an FPGA. The processor 150 converts each input digital signal to a frequency spectrum using an FFT and calculates the distance to the measurement target T based on the frequency spectra.

Light Intensity of Optical Signal Received by Light Receiver 140

Light intensity of an optical signal received by each of the light receivers 140a to 140c will now be described in detail.

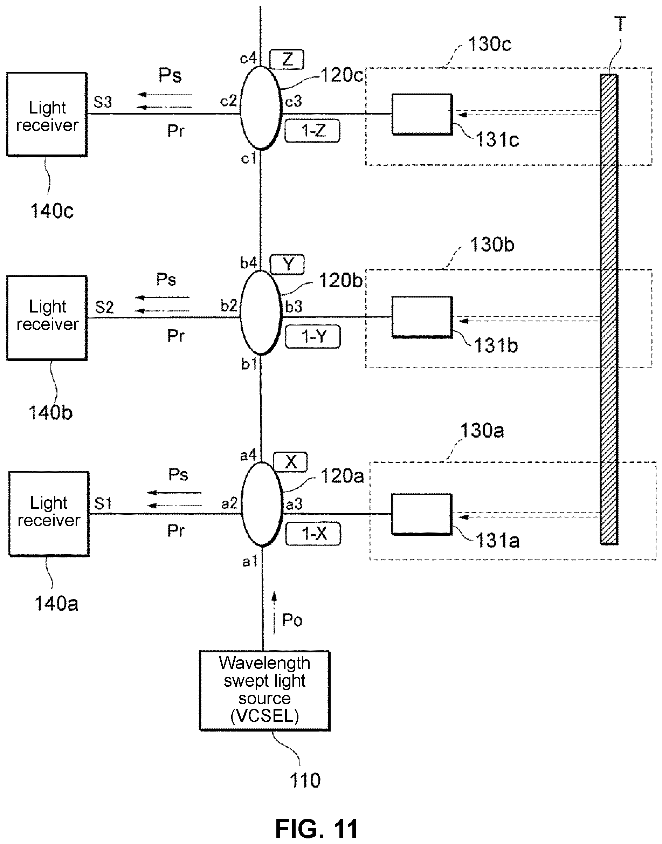

FIG. 11 is a schematic diagram describing the split ratios of the optical couplers 120a to 120c and the light intensity of an optical signal received by each of the light receivers 140a to 140c in the optical interferometric range sensor 100 in one specific example. As shown in FIG. 11, the split ratio of the first-stage optical coupler 120a is X:1 - X, the split ratio of the second-stage optical coupler 120b is Y:1 - Y, and the split ratio of the third-stage optical coupler 120c is Z:1 - Z.

For example, for light with a light intensity Po emitted from the wavelength swept light source 110 and transmitted to the first port a1 of the optical coupler 120a, light with a light intensity (1 - X)Po is output from the third port a3, and light with a light intensity XPo is output from the fourth port a4, based on the split ratio of X:1 - X.

The light output from the third port a3 of the optical coupler 120a and transmitted to the interferometer 130a forms interference light based on measurement light and reference light in the interferometer 130a, and the interference light returns to the third port a3, as described above. The returning light is output to the second port a2 based on the split ratio of X:1 - X of the optical coupler 120a and received by the light receiver 140a.

For example, a light receiving signal generated by the interferometer 130a and received by the light receiver 140a through the optical coupler 120a includes a reference light component having an intensity (light intensity) Pr and a measurement light component having an intensity (light intensity) Ps. The intensities Pr and Ps as well as a signal strength S1 of the light receiving signal received by the light receiver 140a are determined using Formula 2 below, where $\eta$ is a space attenuation factor (including the reflectance on the measurement target T), and R is the reflectance on an end face of the optical fiber.

$$
\begin{aligned}
Pr &= X(1-X)\ PoR \\
Ps &= X(1-X)\ Po(1-R)\ \eta \\
S1 &= 2\sqrt{Pr \cdot Ps} \\
&= 2\sqrt{X(1-X)\ PoR \cdot X(1-X)\ Po(1-R)\ \eta} \\
&= 2X(1-X)\ Po\sqrt{R(1-R)\ \eta}
\end{aligned}
\qquad (2)
$$

For the light emitted from the wavelength swept light source 110 and transmitted to the first port a1 of the optical coupler 120a, the light output from the fourth port a4 based on the split ratio of X:1 - X will now be described.

The light with the light intensity XPo is output from the fourth port a4 of the optical coupler 120a and transmitted to the first port b1 of the optical coupler 120b. The optical coupler 120b splits, based on the split ratio of Y:1 - Y, the light into light with a light intensity (1 - Y)XPo output from the third port b3 and light with a light intensity YXPo output from the fourth port b4.

The light output from the third port b3 of the optical coupler 120b and transmitted to the interferometer 130b forms interference light based on measurement light and reference light in the interferometer 130b, and the interference light returns to the third port b3, as described above. The returning light is output to the second port b2 based on the split ratio of Y:1 - Y of the optical coupler 120b and received by the light receiver 140b.

For example, a light receiving signal generated by the interferometer 130b and received by the light receiver 140b through the optical coupler 120b includes a reference light component having an intensity (light intensity) Pr and a measurement light component having an intensity (light intensity) Ps. The intensities Pr and Ps as well as a signal strength S2 of the light receiving signal received by the light receiver 140b are determined using Formula 3 below, where $\eta$ is a space attenuation factor (including the reflectance on the measurement target T), and R is the reflectance on an end face of the optical fiber.

$$\begin{aligned} \mathrm{P\ r} &= \mathrm{Y\ (1-Y)\ X\ P\ o\ R} \\ \mathrm{P\ s} &= \mathrm{Y\ (1-Y)\ X\ P\ o\ (1-R)\ \eta} \\ \mathrm{S\ 2} &= 2\sqrt{\mathrm{P\ r\cdot P\ s}} \\ &= 2\sqrt{\mathrm{Y\ (1-Y)\ X\ P\ o\ R\cdot(1-Y)\ X\ P\ o\ (1-R)\ \eta}} \\ &= 2\,\mathrm{Y\ (1-Y)\ X\ P\ o}\sqrt{\mathrm{R\ (1-R)}}\,\eta \end{aligned} \qquad (3)$$

For the light output from the fourth port a4 of the optical coupler 120a and transmitted to the first port b1 of the optical coupler 120b, the light output from the fourth port b4 based on the split ratio of Y:1 - Y will now be described.

The light with the light intensity XYPo is output from the fourth port b4 of the optical coupler 120b and transmitted to the first port c1 of the optical coupler 120c. The optical coupler 120c splits, based on the split ratio of Z:1 - Z, the light into light with a light intensity (1 - Z)XYPo output from the third port c3 and light with a light intensity ZXYPo output from the fourth port c4.

The light output from the third port c3 of the optical coupler 120c and transmitted to the interferometer 130c forms interference light based on measurement light and reference light in the interferometer 130c, and the interference light returns to the third port c3, as described above. The returning light is output to the second port c2 based on the split ratio of Z:1 - Z of the optical coupler 120c and received by the light receiver 140c.

For example, a light receiving signal generated by the interferometer 130c and received by the light receiver 140c through the optical coupler 120c includes a reference light component having an intensity (light intensity) Pr and a measurement light component having an intensity (light intensity) Ps. The intensities Pr and Ps as well as a signal strength S3 of the light receiving signal received by the light receiver 140c are determined using Formula 4 below, where $\eta$ is a space attenuation factor (including the reflectance on the measurement target T), and R is the reflectance on an end face of the optical fiber.

$$\begin{aligned} \mathrm{P\ r} &= \mathrm{Z\ (1-Z)\ X\ Y\ P\ o\ R} \\ \mathrm{P\ s} &= \mathrm{Z\ (1-Z)\ X\ Y\ P\ o\ (1-R)\ \eta} \\ \mathrm{S\ 3} &= 2\sqrt{\mathrm{P\ r\cdot P\ s}} \\ &= 2\sqrt{\mathrm{Z\ (1-Z)\ X\ Y\ P\ o\ R\cdot Z\ (1-Z)\ X\ Y\ P\ o\ (1-R)\ \eta}} \\ &= 2\,\mathrm{Z\ (1-Z)\ X\ Y\ P\ o}\sqrt{\mathrm{R\ (1-R)}}\,\eta \end{aligned} \qquad (4)$$

As described above, the signal strength S1 of the light receiving signal received by the light receiver 140a can be calculated using Formula 2, the signal strength S2 of the light receiving signal received by the light receiver 140b can be calculated using Formula 3, and the signal strength S3 of the light receiving signal received by the light receiver 140c can be calculated using Formula 4. The signal strengths are adjusted to have an appropriate relationship between them. From Formulas 2 to 4, the signal strength S1 of the signal strength received by the light receiver 140a, the signal strength S2 of the signal strength received by the light receiver 140b, and the signal strength S3 of the signal strength received by the light

$$\mathrm{S1{:}S2{:}S3} = (1-\mathrm{X}){:}\mathrm{Y}(1-\mathrm{Y}){:}\mathrm{Z}(1-\mathrm{Z})\mathrm{Y} \qquad (5)$$

receiver 140c satisfy the relationship in Formula 5 below.

More specifically,

$$\mathrm{S1{:}S2} = (1-\mathrm{X}){:}\mathrm{Y}(1-\mathrm{Y}) \qquad (6)$$

$$\mathrm{S2{:}S3} = (1-\mathrm{Y}){:}\mathrm{Z}(1-\mathrm{Z}) \qquad (7)$$

More specifically, from Formula 6, the signal strength S1 of the light receiving signal received by the light receiver 140a and the signal strength S2 of the light receiving signal received by the light receiver 140b depend on the relationship between the split ratio of the first-stage optical coupler 120a for the third port a3 (first split ratio, or 1 - X) and the product of the split ratio of the second-stage optical coupler 120b for the third port b3 (first split ratio, or 1 - Y) and the split ratio of the second-stage optical coupler 120b for the fourth port b4 (second split ratio, or Y).

Similarly, from Formula 7, the signal strength S2 of the light receiving signal received by the light receiver 140b

and the signal strength S3 of the light receiving signal received by the light receiver 140c depend on the relationship between the split ratio of the second-stage optical coupler 120b for the third port b3 (first split ratio, or 1 - Y) and the product of the split ratio of the third-stage optical coupler 120c for the third port c3 (first split ratio, or 1 - Z) and the split ratio of the third-stage optical coupler 120c for the fourth port c4 (second split ratio, or Z).

In other words, the signal strength S1 of the light receiving signal received by the light receiver 140a, the signal strength S2 of the light receiving signal received by the light receiver 140b, and the signal strength S3 of the light receiving signal received by the light receiver 140c each depend on the relationship between the first split ratio of the optical coupler 120a for the interferometer 130a, the optical coupler 120b for the interferometer 130b, or the optical coupler 120c for the interferometer 130c and the product of the first split ratio and the second split ratio of the optical coupler in the subsequent stage.

The split ratios of the optical couplers 120a, 120b, and 120c may each be set at least based on the first split ratio for the corresponding interferometer 130a, 130b, or 130c and the product of the first split ratio and the second split ratio of the optical coupler in the subsequent stage.

More specifically, the signal strengths S1 to S3 may be adjusted to satisfy S1 = S2 = S3, thus causing the signal strengths of the light receiving signals received by the light receivers 140a to 140c to be uniform. In this case, the split ratios of the optical couplers 120a to 120c are set to satisfy (1 - X) = Y(1 - Y) = Z(1 - Z) based on Formula 5.

In the optical interferometric range sensor 100 according to the first embodiment of the present invention described above, the split ratios of the optical couplers 120a, 120b, and 120c can each be set at least based on the first split ratio for the corresponding interferometer 130a, 130b, or 130c and the product of the first split ratio and the second split ratio of the optical coupler in the subsequent stage. This relationship allows appropriate adjustment of the signal strengths S1 to S3 of the light receiving signals received by the respective light receivers 140a to 140c that depend on the relationship between these split ratios. This reduces variations in the signal strengths S1 to S3 of the light receiving signals received by the respective light receivers 140a to 140c, thus allowing the distance to the measurement target T to be measured appropriately and improving the measurement accuracy.

Although the split ratios of the optical couplers 120a to 120c are adjusted to satisfy (1 - X) = Y(1 - Y) = Z(1 - Z)Y to cause the signal strengths of the light receiving signals received by the light receivers 140a to 140c to be uniform in the specific example of the present embodiment, the split ratios may be adjusted differently.

For example, the signal strengths of the light receiving signals received by the light receivers 140a to 140c may have variations reduced to a certain degree and may not be uniform when the light receiving signals achieve reliability. More specifically, the signal strengths S1 to S3 of the light receiving signals received by the respective light receivers 140a to 140c are adjusted to be 50% or more relative to one another. The first split ratios for the respective interferometers 130a to 130c are each set to 0.5 to 2 times the product of the first split ratio and the second split ratio of the optical coupler in the subsequent stage. More specifically, the split ratios of the optical couplers 120a to 120c may be set to satisfy S1:S2:S3 = 1 to 2:1 to 2:1 to 2, or to satisfy (1 - X):Y(1 - Y):Z(1 - Z)Y = 1 to 2:1 to 2:1 to 2 based on Formula 5.

First Embodiment

In a first embodiment of the present invention, an optical interferometric range sensor including a reducer for reducing, for optical couplers in multiple stages, light transmitted from an optical coupler in a preceding stage to an optical coupler in a subsequent stage will now be described. In the present embodiment, the same reference numerals in the drawings denote the same components of the optical interferometric range sensor 100 according to the first example. Such components will not be described in detail, and components different from those in the first example will be described.

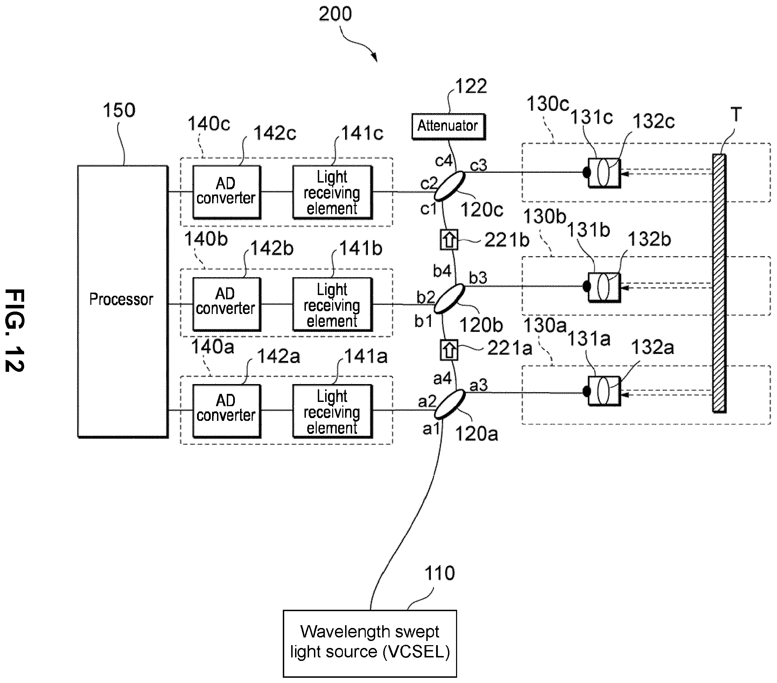

FIG. 12 is a schematic diagram of an optical interferometric range sensor 200 according to the first embodiment of the present invention. As shown in FIG. 12, the optical interferometric range sensor 200 includes a wavelength swept light source 110, optical couplers 120a to 120c, an attenuator 122, interferometers 130a to 130c, light receivers 140a to 140c, and a processor 150. The optical interferometric range sensor 200 includes isolators 221a and 221b, in addition to the components included in the optical interferometric range sensor 100 according to the first example shown FIG. 10.

The isolators 221a and 221b are each an example of a reducer that reduces, for optical couplers in multiple stages, light transmitted from an optical coupler in a preceding stage to an optical coupler in a subsequent stage. In particular, the isolators 221a and 221b are each an example of a blocker that guides light from an optical coupler in a preceding stage to an optical coupler in a subsequent stage, but does not guide light from an optical coupler in a subsequent stage to an optical coupler in a preceding stage. As described in detail below, the isolators 221a and 221b guide light from an optical coupler 120 in a preceding stage to an optical coupler in a subsequent stage, but do not guide light from an optical coupler in a subsequent stage to an optical coupler in a preceding stage. This can reduce returning light from an optical coupler in a subsequent stage to an optical coupler in a preceding stage, thus improving the measurement accuracy of the optical interferometric range sensor 200.

The isolator 221a is optically connected between a fourth port a4 of a first-stage optical coupler 120a and a first port b1 of a second-stage optical coupler 120b. The isolator 221a guides light from the first-stage optical coupler 120a to the second-stage optical coupler 120b, but does not guide light from the second-stage optical coupler 120b to the first-stage optical coupler 120a. More specifically, the isolator 221a blocks a portion of the second interference light, which is input from the second-stage interferometer 130b corresponding to the second-stage optical coupler 120b into a third port b3 of the optical coupler 120b, split by the optical coupler 120b and output from the first port b1 toward the first-stage optical coupler 120a.

The isolator 221b is optically connected between a fourth port b4 of the second-stage optical coupler 120b and a first port c1 of a third-stage optical coupler 120c. The isolator 221b guides light from the second-stage optical coupler 120b to the third-stage optical coupler 120c, but does not guide light from the third-stage optical coupler 120c to the second-stage optical coupler 120b. More specifically, the isolator 221b blocks a portion of the third interference light, which is input from the third-stage interferometer 130c corresponding to the third-stage optical coupler 120c into a third port c3 of the optical coupler 120c, split by the optical coupler 120c and output from the first port c1 toward the second-stage optical coupler 120b.

Light Intensity of Optical Signal Received by Light Receiver 140

Light intensity of an optical signal received by each of the light receivers 140a to 140c in the optical interferometric range sensor 200 including the isolators 221a and 221b will now be described in detail.

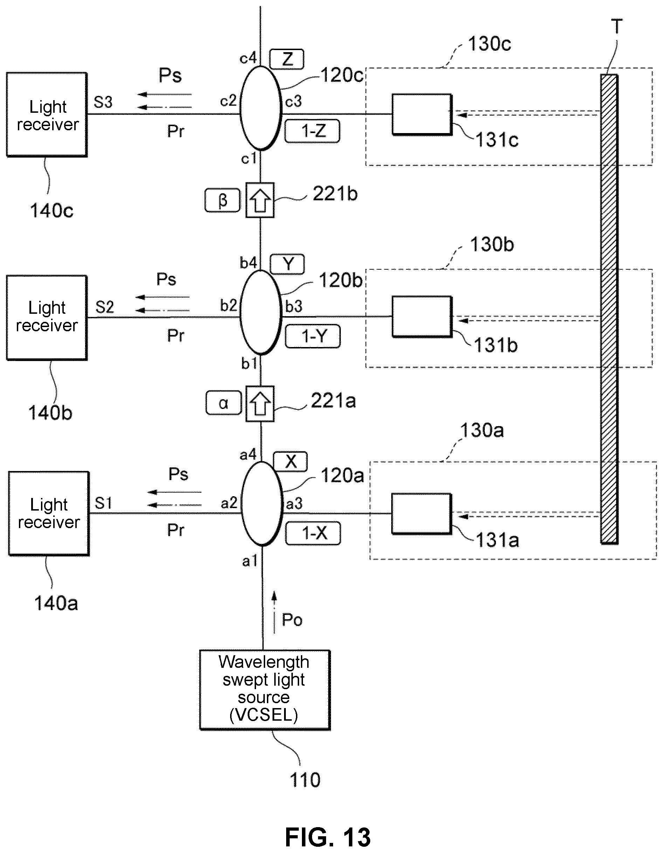

FIG. 13 is a schematic diagram describing the split ratios of the optical couplers 120a to 120c and the light intensity of an optical signal received by each of the light receivers 140a to 140c in the optical interferometric range sensor 200 according to the invention. As shown in FIG. 13, the split ratio of the first-stage optical coupler 120a is X:1 - X, the split ratio of the second-stage optical coupler 120b is Y:1 - Y, and the split ratio of the third-stage optical coupler 120c is Z:1 - Z. The isolator 221a has a transmittance $\alpha$ for light from an optical couple in a preceding stage to an optical couple in a subsequent stage, and the isolator 221b has a transmittance $\beta$ for light from an optical couple in a preceding stage to an optical couple in a subsequent stage. The light transmittance $\alpha$ and $\beta$ may be equal to each other.

For example, light with a light intensity Po is emitted from the wavelength swept light source 110 and transmitted to a first port a1 of the optical coupler 120a. The optical coupler 120a splits, based on the split ratio of X:1 - X, the light into light with a light intensity (1 - X)Po output from a third port a3 and light with a light intensity XPo output from a fourth port a4. The light (light intensity XPo) output from the fourth port a4 of the optical coupler 120a passes through the isolator 221a (with the light transmittance $\alpha$) and is transmitted to the first port b1 of the optical coupler 120b. The transmitted light has a light intensity $\alpha$XPo.

Light with a light intensity (1 - Y)$\alpha$XPo is transmitted from the third port b3 of the optical coupler 120b to the interferometer 130b. Light with a light intensity $\alpha$XYPo is output from the fourth port b4.

The light with the light intensity $\alpha$XYPo output from the fourth port b4 of the optical coupler 120b passes through the isolator 221b (with the light transmittance $\beta$) and is transmitted to the first port c1 of the optical coupler 120c. The transmitted light has a light intensity $\alpha\beta$XPo.

Light with a light intensity (1 - Z)$\alpha\beta$XPo is transmitted from the third port c3 of the optical coupler 120c to the interferometer 130c.

In this manner, light passing through the isolators 221a and 221b and transmitted from an optical coupler in a subsequent stage to a corresponding interferometer has a reduced light intensity. This reduces interference light generated by the interferometer and the signal strength of the light receiving signal received by the corresponding light receiver.

As described in the first example, based on Formulas 2 to 4, the signal strengths S1 to S3 of the light receiving signals received by the respective light receivers 140a to 140c are determined using Formula 8 below.

$$
\begin{aligned}
S1 &= 2X(1-X)Po\sqrt{R(1-R)\eta} \\
S2 &= 2Y(1-Y)\alpha XPo\sqrt{R(1-R)\eta} \\
S3 &= 2Z(1-Z)\alpha\beta XYPo\sqrt{R(1-R)\eta}
\end{aligned}
\tag{8}
$$

From Formula 8, the signal strengths S1 to S3 of the signal strength received by the respective light receivers 140a to 140c satisfy the relationship in Formula 9 below.

$$
S1{:}S2{:}S3 = (1-X){:}\alpha Y(1-Y){:}\alpha\beta Z(1-Z)Y
\tag{9}
$$

More specifically,

$$S1{:}S2 = (1 - X){:}\alpha Y(1 - Y) \qquad (10)$$

$$S2{:}S3 = (1 - Y){:}\beta Z(1 - Z) \qquad (11)$$

From Formulas 10 and 11, the signal strengths S1 to S3 of the light receiving signals received by the respective light receivers 140a to 140c each depend on the relationship between the first split ratio of the corresponding optical coupler 120a, 120b, or 120c for the corresponding interferometer 130a, 130b, or 130c and the product of the first split ratio of the optical coupler in the subsequent stage, the second split ratio of the optical coupler in the subsequent stage, and the transmittance for the optical coupler in the subsequent stage.

The split ratios of the optical couplers 120a, 120b, and 120c may each be set at least based on the first split ratio for the corresponding interferometer 130a, 130b, or 130c and the product of the first split ratio of the optical coupler in the subsequent stage, the second split ratio of the optical coupler in the subsequent stage, and the transmittance for the optical coupler in the subsequent stage.

More specifically, the signal strengths S1 to S3 may be adjusted to satisfy S1 = S2 = S3, thus causing the signal strengths of the light receiving signals received by the light receivers 140a to 140c to be uniform. In this case, the split ratios of the optical couplers 120a to 120c are set to satisfy (1 - X) = $\alpha Y(1 - Y)$ = $\alpha\beta Z(1 - Z)Y$ based on Formula 9.

In the optical interferometric range sensor 200 according to the second embodiment of the present invention described above, the split ratios of the optical couplers 120a, 120b, and 120c can each be set at least based on the first split ratio for the corresponding interferometer 130a, 130b, or 130c and the product of the first split ratio of the optical coupler in the subsequent stage, the second split ratio of the optical coupler in the subsequent stage, and the transmittance for the optical coupler in the subsequent stage. This relationship allows appropriate adjustment of the signal strengths S1 to S3 of the light receiving signals received by the respective light receivers 140a to 140c that depend on the relationship between these split ratios. This reduces variations in the signal strengths S1 to S3 of the light receiving signals received by the respective light receivers 140a to 140c, thus allowing the distance to the measurement target T to be measured appropriately and improving the measurement accuracy.

In the present embodiment as well, for example, the signal strengths of the light receiving signals received by the light receivers 140a to 140c may have variations reduced to a certain degree and may not be uniform when the light receiving signals achieve reliability. More specifically, the signal strengths S1 to S3 of the light receiving signals received by the respective light receivers 140a to 140c are adjusted to be 50% or more relative to one another. The first split ratios for the corresponding interferometers 130a to 130c are each set to 0.5 to 2 times the product of the first split ratio of the optical coupler in the subsequent stage, the second split ratio of the optical coupler in the subsequent stage, and the transmittance for the optical coupler in the subsequent stage. More specifically, the split ratios of the optical couplers 120a to 120c may be set to satisfy S1:S2:S3 = 1 to 2:1 to 2:1 to 2, or satisfy (1 - X) = $\alpha Y(1 - Y)$ = $\alpha\beta Z(1 - Z)Y$ = 1 to 2:1 to 2:1 to 2 based on Formula 9.

Modifications

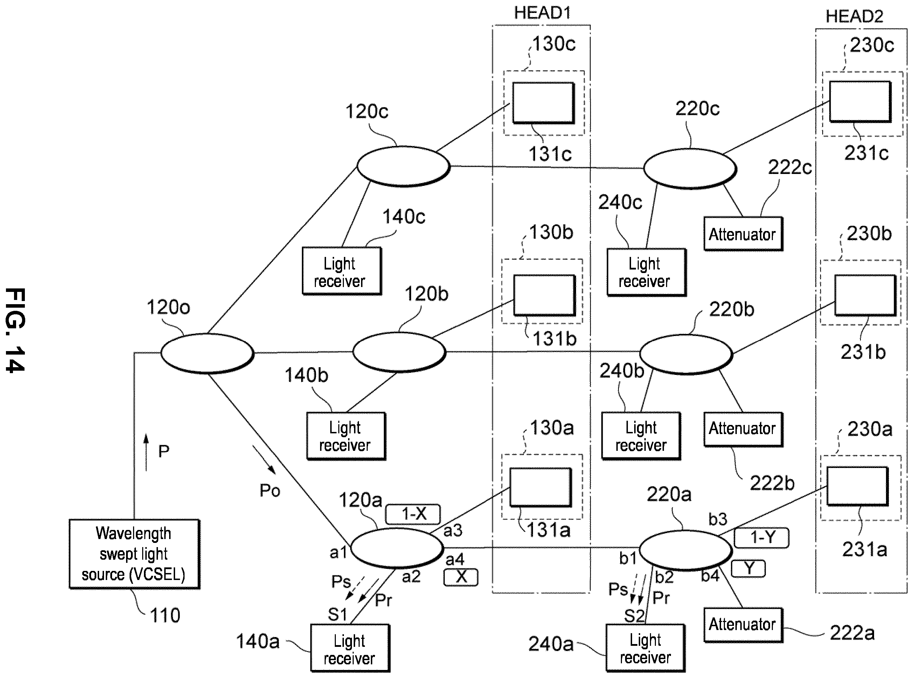

FIG. 14 is a schematic diagram of an optical interferometric range sensor 300 including two multichannel heads. As shown in FIG. 14, the optical interferometric range sensor 300 includes the wavelength swept light source 110, an optical coupler 120o, the optical couplers 120a to 120c, the interferometers 130a to 130c (sensor heads 131a to 131c), and the light receivers 140a to 140c. The optical interferometric range sensor 300 further includes optical couplers 220a to 220c, interferometers 230a to 230c (sensor heads 231a to 231c), light receivers 240a to 240c, and attenuators 222a to 222c. The optical interferometric range sensor 300 includes the processor shown in FIGs. 10 and 12, which is not shown in this figure.

The optical interferometric range sensor 300 includes the optical couplers 120a to 120c that are connected in parallel. The sensor head 131a in the interferometer 130a corresponding to the optical coupler 120a, the sensor head 131b in the interferometer 130b corresponding to the optical coupler 120b, and the sensor head 131c in the interferometer 130c corresponding to the optical coupler 120c are included in a HEAD1.

The optical coupler 120a is connected to the optical coupler 220a in series, the optical coupler 120b is connected to the optical coupler 220b in series, and the optical coupler 120c is connected to the optical coupler 220c in series. The sensor head 231a in the interferometer 230a corresponding to the optical coupler 220a, the sensor head 231b in the interferometer 230b corresponding to the optical coupler 220b, and the sensor head 231c in the interferometer 230c corresponding to the optical coupler 220c are included in a HEAD2.

Light P emitted from the wavelength swept light source 110 is split by the optical coupler 120o, and for example, light with a light intensity Po is transmitted to the first port a1 of the optical coupler 120a. With the split ratio of the optical coupler 120a being X:1 - X as in the first embodiment, light with a light intensity (1 - X)Po is output from the third port a3, and light with a light intensity XPo is output from the fourth port a4.

The light (light intensity XPo) output from the fourth port a4 of the optical coupler 120a is transmitted to a first port b1 of the optical coupler 220a. With the split ratio of the optical coupler 220a being Y:1 - Y as in the first embodiment, light with a light intensity (1 - Y)XPo is output from the third port b3, and light with a light intensity XYPo is output from the fourth port b4 to be attenuated by the attenuator 222a.

The light receiver 140a receives, through the optical coupler 120a, interference light generated by the interferometer 130a from light with a light intensity (1 - X)Po output from the third port a3 of the optical coupler 120a. The light receiver 240a receives, through the optical coupler 220a, interference light generated by the interferometer 230a from light with a light intensity (1 - Y)XPo output from the third port a3 of the optical coupler 220a.

The relationship between the signal strength S1 of the light receiving signal received by the light receiver 140a and the signal strength S2 of the light receiving signal received by the light receiver 240a satisfies the relationship in Formula 6 described in the first embodiment. More specifically, S1:S2 = (1 - X):Y(1 - Y) is satisfied.

With the isolator 221a (with the light transmittance $\alpha$) described in the second embodiment included between the optical coupler 120a and the optical coupler 220a that are connected in series, the signal strengths satisfy the relationship in Formula 10 described in the second embodiment. More specifically, S1:S2 = (1 - X):$\alpha$Y(1 - Y) is satisfied.

Similarly, for the optical coupler 120b and the optical coupler 220b that are connected in series, the relationship between the signal strength of the light receiving signal received by the light receiver 140b and the signal strength of the light receiving signal received by the light receiver 240b is the same as described above. For the optical coupler 120c and the optical coupler 220c that are connected in series, the relationship between the signal strength of the light receiving signal received by the light receiver 140c and the signal strength of the light receiving signal received by the light receiver 240c is the same as described above.

Modifications of Interferometer

In the embodiment described above, the optical interferometric range sensor 100 includes the interferometers 130a to 130c being Fizeau interferometers that each generate reference light using the end of the optical fiber as a reference surface. The interferometers are not limited to the Fizeau interferometers.

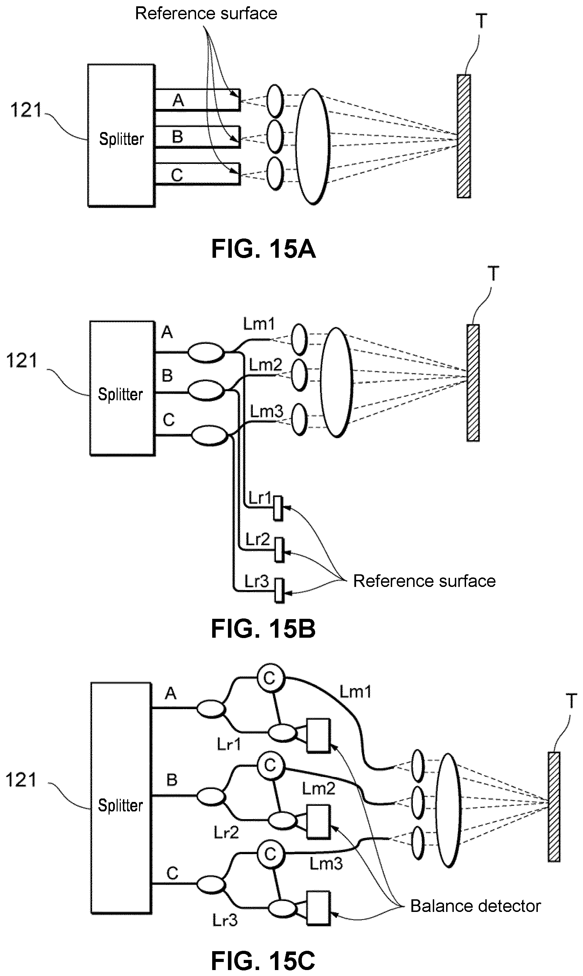

FIGs. 15A, 15B, and 15C are diagrams of interferometers that generate interference light using measurement light and reference light in modifications. In FIG. 15A, a splitter 121 splits light on each of optical paths A to C into reference light that uses the end of the optical fiber as a reference surface and measurement light emitted from the sensor head and then reaching and reflected from a measurement target T. Interference light occurs based on the difference in optical path length between the reference light and the measurement light. This structure includes the same interferometers as the interferometers 130a to 130c (Fizeau interferometers) in the optical interferometric range sensor 100 according to the embodiment described above. The reference surface may reflect light due to the difference in refractive index between the optical fiber and air (Fresnel reflection). The end of the optical fiber may be coated with a reflective film, or may be coated with a non-reflective film and receive a reflective surface such as a lens surface separately.

In FIG. 15B, the splitter 121 splits light on the optical paths A to C into measurement light to be guided along measurement paths Lm1 to Lm3 to the measurement target T and reference light to be guided along reference optical paths Lr to Lr3. The reference optical paths Lr to Lr3 each include a reference surface at its end (Michelson interferometer). The reference surface may be an end of an optical fiber coated with a reflective film, or may be an end of an optical fiber coated with a non-reflective film and receiving, for example, a mirror separately. This structure generates interference light on the optical path A with the length difference between the measurement optical path Lm1 and the reference optical path Lr1, interference light on the optical path B with the length difference between the measurement optical path Lm2 and the reference optical path Lr2, and interference light on the optical path C with the length difference between the measurement optical path Lm3 and the reference optical path Lr3.

In FIG. 15C, the splitter 121 splits light on the optical paths A to C into measurement light to be guided along measurement optical paths Lm1 to Lm3 to the measurement target T and reference light to be guided along reference optical paths Lr1 to Lr3. The reference optical paths Lr1 to L3 each include a balance detector (Mach-Zehnder interferometer). This structure generates interference light on the optical path A with the length difference between the measurement optical path Lm1 and the reference optical path Lr1, interference light on the optical path B with the length difference between the measurement optical path Lm2 and the reference optical path Lr2, and interference light on the optical path C with the length difference between the measurement optical path Lm3 and the reference optical path Lr3.

As described above, the interferometer is not limited to the Fizeau interferometer described in the embodiment, and may be, for example, a Michelson or Mach-Zehnder interferometer, or any other interferometer that can generate interference light by setting the optical path length difference between the measurement light and the reference light. These or other interferometers may be combined.

The above embodiments intend to facilitate understanding of the present invention and do not limit the present invention. The elements in the embodiments and their positions, materials, conditions, shapes, sizes, or other parameters are not limited to those illustrated above but may be changed as appropriate. The components in different embodiments may be partly combined or interchanged.

REFERENCE SIGNS LIST

1 sensor system
10 displacement sensor
11 control device
12 sensor for control signal input
13 external connection device
20 sensor head
21 objective lens
22a to 22c collimating lens
23 lens holder
24 optical fiber array
30 controller
31 display
32 setting unit
33 external interface (I/F)
34 optical fiber connector
35 external storage
36 measurement processor
40 optical fiber
51 wavelength swept light source
52 optical amplifier
53, 53a, 53b isolator
54, 54a to 54e optical coupler
55 attenuator
56a to 56c light receiving element
58a to 58c AD converter
59 processor
60 balance detector
61 correction signal generator
71a to 71e light receiving element
72a to 72c amplifier circuit
74a to 74c AD converter
75 processor
76 differential amplifier circuit
77 correction signal generator
100, 200, 300 optical interferometric range sensor
110 wavelength swept light source
120o, 120a to 120c, 220a to 220c optical coupler
122, 222a to 222c attenuator
130a to 130c, 230a to 230c interferometer
131a to 131c, 231a to 231c sensor head
132a to 132c objective lens
140a to 140c, 240a to 240c light receiver
141a to 141c light receiving element
142a to 142c AD converter
150 processor
221a, 221b isolator
a1 to a4, b1 to b4, c1 to c4port of optical coupler
T measurement target
Lm1 to Lm3 measurement optical path
Lr1 to Lr3 reference optical path

**Claims**

1. An optical interferometric range sensor (10; 100; 200; 300), comprising:

   a light source (51; 110) configured to emit light with a changing wavelength;

   a plurality of interferometers (130a to 130c; 230a to 230c) configured to receive the light emitted from the light source (51; 110), each of the plurality of interferometers (130a to 130c; 230a to 230c) being configured to generate interference light based on measurement light and reference light, the measurement light being light reaching a measurement target (T) and reflected from the measurement target (T), the reference light being light traveling on an optical path at least partially different from an optical path of the measurement light;

   optical couplers (54a to 54c; 120a to 120c; 220a to 220c) in a plurality of stages, each of the optical couplers (54a to 54c; 120a to 120c; 220a to 220c) being configured to receive the light emitted from the light source (51; 110) from an optical coupler in a preceding stage to split the light to be incident on a corresponding interferometer of the plurality of interferometers (130a to 130c; 230a to 230c) and an optical coupler in a subsequent stage;

   a light receiver (56a to 56c, 58a to 58c; 71a to 71c, 74a to 74c; 140a to 140c; 240a to 240c) configured to receive the interference light from each of the plurality of interferometers (130a to 130c; 230a to 230c) to convert the interference light to an electric signal;

   a processor (59, 75; 150) configured to calculate a distance to the measurement target (T) based on the electric signal resulting from conversion performed by the light receiver (56a to 56c, 58a to 58c; 71a to 71c, 74a to 74c; 140a to 140c; 240a to 240c); and

   a plurality of isolators (53a, 53b, 221a, 221b) configured to guide light from the optical coupler (54a to 54c; 120a to 120c; 220a to 220c) in the preceding stage to the optical coupler (54a to 54c; 120a to 120c; 220a to 220c) in a subsequent stage of the optical couplers in the plurality of stages and configured to block light from a subsequent stage of the optical couplers to the optical coupler in the preceding stage of the optical couplers in the plurality of stages,

   wherein the light received by each of the optical couplers (54a to 54c; 120a to 120c; 220a to 220c) in the plurality of stages is split based on a first split ratio (1 - X) for a corresponding interferometer and a second split ratio (X) for an optical coupler in a subsequent stage subsequent to a stage including the optical coupler receiving the light, and the first split ratio (1 - X) and the second split ratio (X) are set at least based on the first split ratio (1 - X) of the optical coupler receiving the light and a product of a first split ratio (1 - Y) and a second split ratio (Y) of the optical coupler in the subsequent stage.

2. The optical interferometric range sensor (10; 100; 200; 300) according to claim 1, wherein the first split ratio (1 - X) of each of the optical couplers (54a to 54c; 120a to 120c; 220a to 220c) in the plurality of stages is set to 0.5 to 2 times the product of the first split ratio (1 - Y) and the second split ratio (Y) of the optical coupler in the subsequent stage.

3. The optical interferometric range sensor (10; 100; 200; 300) according to claim 1 or claim 2, wherein the first split ratio (1 - X) of each of the optical couplers (54a to 54c; 120a to 120c; 220a to 220c) in the plurality of stages is set to be substantially equal to the product of the first split ratio (1 - Y) and the second split ratio (Y) of the optical coupler in the subsequent stage.

4. The optical interferometric range sensor (10; 200) according to any one of claims 1 to 3, further comprising:
   a reducer (53a, 53b; 221a, 221b) configured to reduce light transmitted from an optical coupler in a preceding stage to an optical coupler in a subsequent stage of the optical couplers (54a to 54c; 120a to 120c) in the plurality of stages.

5. The optical interferometric range sensor (10; 200) according to claim 4, wherein

   the reducer (53a, 53b; 221a, 221b) has a predetermined transmittance for light transmitted from an optical coupler in a preceding stage to an optical coupler in a subsequent stage of the optical couplers (54a to 54c; 120a to 120c) in the plurality of stages, and
   the first split ratio (1 - X) and the second split ratio (X) of each of the optical couplers (54a to 54c; 120a to 120c) in the plurality of stages are set based on the first split ratio (1 - X) of the optical coupler and a product of the first split ratio (1 - Y) of the optical coupler in the subsequent stage, the second split ratio (Y) of the optical coupler in the subsequent stage, and the predetermined transmittance for light from the optical coupler to the optical coupler in the subsequent stage.

6. The optical interferometric range sensor (10; 200) according to claim 5, wherein

the first split ratio (1 - X) of each of the optical couplers (54a to 54c; 120a to 120c) in the plurality of stages is set to 0.5 to 2 times the product of the first split ratio (1 - Y) of the optical coupler in the subsequent stage, the second split ratio (Y) of the optical coupler in the subsequent stage, and the predetermined transmittance for light from the optical coupler to the optical coupler in the subsequent stage.

7. The optical interferometric range sensor (10; 200) according to claim 5 or claim 6, wherein
the first split ratio (1 - X) of each of the optical couplers (54a to 54c; 120a to 120c) in the plurality of stages is set to be substantially equal to the product of the first split ratio (1 - Y) of the optical coupler in the subsequent stage, the second split ratio (Y) of the optical coupler in the subsequent stage, and the predetermined transmittance for light from the optical coupler to the optical coupler in the subsequent stage.

**Patentansprüche**

1. Optischer interferometrischer Abstandssensor (10; 100; 200; 300), aufweisend:

eine Lichtquelle (51; 110), die eingerichtet ist, Licht mit einer sich ändernden Wellenlänge zu emittieren;
mehrere Interferometer (130a bis 130c; 230a bis 230c), die eingerichtet sind, das von der Lichtquelle (51; 110) emittierte Licht zu empfangen, wobei jedes der mehreren Interferometern (130a bis 130c; 230a bis 230c) eingerichtet ist, Interferenzlicht basierend auf Messlicht und Referenzlicht zu erzeugen, wobei das Messlicht Licht ist, das ein Messziel (T) erreicht und von dem Messziel (T) reflektiert wird, wobei das Referenzlicht Licht ist, das sich auf einem optischen Weg bewegt, der sich zumindest teilweise von einem optischen Weg des Messlichts unterscheidet;
optische Koppler (54a bis 54c; 120a bis 120c; 220a bis 220c) in mehreren Stufen, wobei jeder der optischen Koppler (54a bis 54c; 120a bis 120c; 220a bis 220c) eingerichtet ist, das von der Lichtquelle (51; 110) emittierte Licht von einem optischen Koppler in einer vorhergehenden Stufe zu empfangen, um das Licht zu teilen, so dass es auf ein entsprechendes Interferometer der mehreren Interferometer (130a bis 130c; 230a bis 230c) und einen optischen Koppler in einer nachfolgenden Stufe einfällt;
einen Lichtempfänger (56a bis 56c, 58a bis 58c; 71a bis 71c, 74a bis 74c; 140a bis 140c; 240a bis 240c), der eingerichtet ist, das Interferenzlicht von jedem der mehreren Interferometer (130a bis 130c; 230a bis 230c) zu empfangen, um das Interferenzlicht in ein elektrisches Signal umzuwandeln;
einen Prozessor (59, 75; 150), der eingerichtet ist, einen Abstand zu dem Messziel (T) basierend auf dem elektrischen Signal zu berechnen, das aus der durch den Lichtempfänger (56a bis 56c, 58a bis 58c; 71a bis 71c, 74a bis 74c; 140a bis 140c; 240a bis 240c) durchgeführten Umwandlung resultiert; und
mehrere Isolatoren (53a, 53b, 221a, 221b), die eingerichtet sind, Licht von dem optischen Koppler (54a bis 54c; 120a bis 120c; 220a bis 220c) in der vorhergehenden Stufe zu dem optischen Koppler (54a bis 54c; 120a bis 120c; 220a bis 220c) in einer nachfolgenden Stufe der optischen Koppler in den mehreren Stufen zu leiten, und eingerichtet sind, Licht von einer nachfolgenden Stufe der optischen Koppler zu dem optischen Koppler in der vorhergehenden Stufe der optischen Koppler in den mehreren Stufen zu blockieren,
wobei das durch jeden der optischen Koppler (54a bis 54c; 120a bis 120c; 220a bis 220c) in den mehreren Stufen empfangene Licht basierend auf einem ersten Teilungsverhältnis (1 - X) für ein entsprechendes Interferometer und einem zweiten Teilungsverhältnis (X) für einen optischen Koppler in einer nachfolgenden Stufe nach einer Stufe, die den das Licht empfangenden optischen Koppler enthält, geteilt wird, und das erste Teilungsverhältnis (1 - X) und das zweite Teilungsverhältnis (X) zumindest basierend auf dem ersten Teilungsverhältnis (1 - X) des das Licht empfangenden optischen Kopplers und einem Produkt eines ersten Teilungsverhältnisses (1 - Y) und eines zweiten Teilungsverhältnisses (Y) des optischen Kopplers in der nachfolgenden Stufe eingestellt werden.

2. Optischer interferometrischer Abstandssensor (10; 100; 200; 300) nach Anspruch 1, wobei
das erste Teilungsverhältnis (1 - X) jedes der optischen Koppler (54a bis 54c; 120a bis 120c; 220a bis 220c) in den mehreren Stufen auf das 0,5- bis 2-fache des Produkts des ersten Teilungsverhältnisses (1 - Y) und des zweiten Teilungsverhältnisses (Y) des optischen Kopplers in der nachfolgenden Stufe eingestellt wird.

3. Optischer interferometrischer Abstandssensor (10; 100; 200; 300) nach Anspruch 1 oder Anspruch 2, wobei
das erste Teilungsverhältnis (1 - X) jedes der optischen Koppler (54a bis 54c; 120a bis 120c; 220a bis 220c) in den mehreren Stufen so eingestellt wird, dass es im Wesentlichen gleich dem Produkt des ersten Teilungsverhältnisses (1 - Y) und des zweiten Teilungsverhältnisses (Y) des optischen Kopplers in der nachfolgenden Stufe ist.

4. Optischer interferometrischer Abstandssensor (10; 200) nach einem der Ansprüche 1 bis 3, ferner aufweisend:

einen Reduzierer (53a, 53b; 221a, 221b), der eingerichtet ist, Licht zu reduzieren, das von einem optischen Koppler in einer vorhergehenden Stufe zu einem optischen Koppler in einer nachfolgenden Stufe der optischen Koppler (54a bis 54c; 120a bis 120c) in den mehreren Stufen übertragen wird.

5. Optischer interferometrischer Abstandssensor (10; 200) nach Anspruch 4, wobei

der Reduzierer (53a, 53b; 221a, 221b) eine vorbestimmte Durchlässigkeit für Licht aufweist, das von einem optischen Koppler in einer vorhergehenden Stufe zu einem optischen Koppler in einer nachfolgenden Stufe der optischen Koppler (54a bis 54c; 120a bis 120c) in den mehreren Stufen übertragen wird, und
das erste Teilungsverhältnis (1 - X) und das zweite Teilungsverhältnis (X) jedes der optischen Koppler (54a bis 54c; 120a bis 120c) in den mehreren Stufen basierend auf dem ersten Teilungsverhältnis (1 - X) des optischen Kopplers und einem Produkt des ersten Teilungsverhältnisses (1 - Y) des optischen Kopplers in der nachfolgenden Stufe, des zweiten Teilungsverhältnisses (Y) des optischen Kopplers in der nachfolgenden Stufe und der vorbestimmten Durchlässigkeit für Licht von dem optischen Koppler zu dem optischen Koppler in der nachfolgenden Stufe eingestellt werden.

6. Optischer interferometrischer Abstandssensor (10; 200) nach Anspruch 5, wobei
das erste Teilungsverhältnis (1 - X) jedes der optischen Koppler (54a bis 54c; 120a bis 120c) in den mehreren Stufen auf das 0,5- bis 2-fache des Produkts des ersten Teilungsverhältnisses (1 - Y) des optischen Kopplers in der nachfolgenden Stufe, des zweiten Teilungsverhältnisses (Y) des optischen Kopplers in der nachfolgenden Stufe und der vorbestimmten Durchlässigkeit für Licht von dem optischen Koppler zu dem optischen Koppler in der nachfolgenden Stufe eingestellt wird.

7. Optischer interferometrischer Abstandssensor (10; 200) nach Anspruch 5 oder Anspruch 6, wobei
das erste Teilungsverhältnis (1 - X) jedes der optischen Koppler (54a bis 54c; 120a bis 120c) in den mehreren Stufen so eingestellt wird, dass es im Wesentlichen gleich dem Produkt des ersten Teilungsverhältnisses (1 - Y) des optischen Kopplers in der nachfolgenden Stufe, des zweiten Teilungsverhältnisses (Y) des optischen Kopplers in der nachfolgenden Stufe und der vorbestimmten Durchlässigkeit für Licht von dem optischen Koppler zu dem optischen Koppler in der nachfolgenden Stufe ist.


## Revendications

1. Capteur de distance interférométrique optique (10 ; 100 ; 200 ; 300), comprenant :

une source de lumière (51 ; 110) configurée pour émettre de la lumière avec une longueur d'onde variable ;
une pluralité d'interféromètres (130a à 130c ; 230a à 230c) configurés pour recevoir la lumière émise par la source de lumière (51 ; 110), chacun de la pluralité d'interféromètres (130a à 130c ; 230a à 230c) étant configuré pour générer une lumière d'interférence sur la base d'une lumière de mesure et d'une lumière de référence, la lumière de mesure étant une lumière atteignant une cible de mesure (T) et réfléchie par la cible de mesure (T), la lumière de référence étant une lumière se déplaçant sur un trajet optique au moins partiellement différent d'un trajet optique de la lumière de mesure ;
des coupleurs optiques (54a à 54c ; 120a à 120c ; 220a à 220c) dans une pluralité d'étages, chacun des coupleurs optiques (54a à 54c ; 120a à 120c ; 220a à 220c) étant configuré pour recevoir la lumière émise par la source de lumière (51 ; 110) à partir d'un coupleur optique dans un étage précédent pour diviser la lumière pour qu'elle soit incidente sur un interféromètre correspondant de la pluralité d'interféromètres (130a à 130c ; 230a à 230c) et un coupleur optique dans un étage suivant ;
un récepteur de lumière (56a à 56c, 58a à 58c ; 71a à 71c, 74a à 74c ; 140a à 140c ; 240a à 240c) configuré pour recevoir la lumière d'interférence à partir de chacun de la pluralité d'interféromètres (130a à 130c ; 230a à 230c) pour convertir la lumière d'interférence en un signal électrique ;
un processeur (59, 75 ; 150) configuré pour calculer une distance jusqu'à la cible de mesure (T) sur la base du signal électrique résultant de la conversion effectuée par le récepteur de lumière (56a à 56c, 58a à 58c ; 71a à 71c, 74a à 74c ; 140a à 140c ; 240a à 240c) ; et
une pluralité d'isolateurs (53a, 53b, 221a, 221b) configurés pour guider la lumière à partir du coupleur optique (54a à 54c ; 120a à 120c ; 220a à 220c) dans l'étage précédent jusqu'au coupleur optique (54a à 54c ; 120a à 120c ; 220a à 220c) dans un étage suivant des coupleurs optiques dans la pluralité d'étages et configurés pour bloquer la lumière à partir d'un étage suivant des coupleurs optiques jusqu'au coupleur optique dans l'étage précédent des coupleurs optiques dans la pluralité d'étages,

dans lequel la lumière reçue par chacun des coupleurs optiques (54a à 54c ; 120a à 120c ; 220a à 220c) dans la pluralité d'étages est divisée sur la base d'un premier rapport de division (1 - X) pour un interféromètre correspondant et d'un second rapport de division (X) pour un coupleur optique dans un étage suivant à la suite d'un étage incluant le coupleur optique recevant la lumière, et le premier rapport de division (1 - X) et le second rapport de division (X) sont réglés au moins sur la base du premier rapport de division (1 - X) du coupleur optique recevant la lumière et d'un produit d'un premier rapport de division (1 - Y) et d'un second rapport de division (Y) du coupleur optique dans l'étage suivant.

2. Capteur de distance interférométrique optique (10 ; 100 ; 200 ; 300) selon la revendication 1, dans lequel le premier rapport de division (1 - X) de chacun des coupleurs optiques (54a à 54c ; 120a à 120c ; 220a à 220c) dans la pluralité d'étages est réglé à 0,5 à 2 fois le produit du premier rapport de division (1 - Y) et du second rapport de division (Y) du coupleur optique dans l'étage suivant.

3. Capteur de distance interférométrique optique (10 ; 100 ; 200 ; 300) selon la revendication 1 ou la revendication 2, dans lequel
le premier rapport de division (1 - X) de chacun des coupleurs optiques (54a à 54c ; 120a à 120c ; 220a à 220c) dans la pluralité d'étages est réglé pour être sensiblement égal au produit du premier rapport de division (1 - Y) et du second rapport de division (Y) du coupleur optique dans l'étage suivant.

4. Capteur de distance interférométrique optique (10 ; 200) selon l'une quelconque des revendications 1 à 3, comprenant en outre :
un réducteur (53a, 53b ; 221a, 221b) configuré pour réduire la lumière transmise à partir d'un coupleur optique dans un étage précédent jusqu'à un coupleur optique dans un étage suivant des coupleurs optiques (54a à 54c ; 120a à 120c) dans la pluralité d'étages.

5. Capteur de distance interférométrique optique (10 ; 200) selon la revendication 4, dans lequel

le réducteur (53a, 53b ; 221a, 221b) a une transmittance prédéterminée pour la lumière transmise à partir d'un coupleur optique dans un étage précédent jusqu'à un coupleur optique dans un étage suivant des coupleurs optiques (54a à 54c ; 120a à 120c) dans la pluralité d'étages, et
le premier rapport de division (1 - X) et le second rapport de division (X) de chacun des coupleurs optiques (54a à 54c ; 120a à 120c) dans la pluralité d'étages sont réglés sur la base du premier rapport de division (1 - X) du coupleur optique et d'un produit du premier rapport de division (1 - Y) du coupleur optique dans l'étage suivant, du second rapport de division (Y) du coupleur optique dans l'étage suivant, et de la transmittance prédéterminée pour la lumière à partir du coupleur optique jusqu'au coupleur optique dans l'étage suivant.

6. Capteur de distance interférométrique optique (10 ; 200) selon la revendication 5, dans lequel
le premier rapport de division (1 - X) de chacun des coupleurs optiques (54a à 54c ; 120a à 120c) dans la pluralité d'étages est réglé à 0,5 à 2 fois le produit du premier rapport de division (1 - Y) du coupleur optique dans l'étage suivant, du second rapport de division (Y) du coupleur optique dans l'étage suivant, et de la transmittance prédéterminée pour la lumière à partir du coupleur optique jusqu'au coupleur optique dans l'étage suivant.

7. Capteur de distance interférométrique optique (10 ; 200) selon la revendication 5 ou la revendication 6, dans lequel
le premier rapport de division (1 - X) de chacun des coupleurs optiques (54a à 54c ; 120a à 120c) dans la pluralité d'étages est réglé pour être sensiblement égal au produit du premier rapport de division (1 - Y) du coupleur optique dans l'étage suivant, du second rapport de division (Y) du coupleur optique dans l'étage suivant, et de la transmittance prédéterminée pour la lumière à partir du coupleur optique jusqu'au coupleur optique dans l'étage suivant.

FIG. 1

FIG. 2

Sensor system 1

| | | |
|---|---|---|
| **10** | **11** | **12** |
| Displacement sensor | Control device (PLC) | Sensor for control signal input |

External connection device (PC)

**13**

# FIG. 3

```
          ┌─────────────┐
          │    Start     │
          └─────────────┘
                 │
                 ▼
    ┌──────────────────────────┐
    │                          │  ～～ S21
    │  Detect measurement target │
    │                          │
    └──────────────────────────┘
                 │
                 ▼
    ┌──────────────────────────┐
    │ Instruct displacement sensor to │  ～～ S22
    │    perform measurement    │
    └──────────────────────────┘
                 │
                 ▼
    ┌──────────────────────────┐
    │ Measure target with displacement │  ～～ S23
    │          sensor           │
    └──────────────────────────┘
                 │
                 ▼
    ┌──────────────────────────┐
    │  Output measurement results │  ～～ S24
    └──────────────────────────┘
                 │
                 ▼
          ┌─────────────┐
          │     End      │
          └─────────────┘
```

FIG. 4

FIG. 5A

FIG. 5B

Sensor head 20

**FIG. 6A**

Optical fiber

**FIG. 6B**

FIG. 7

```
        ╭─────────────╮
        │    Start    │
        ╰──────┬──────╯
               │
               ▼
   ┌───────────────────────┐
   │     Perform FFT       │ ～～ S31
   └───────────┬───────────┘
               │
               ▼
   ┌───────────────────────┐
   │ Perform conversion    │ ～～ S32
   │     to distance       │
   └───────────┬───────────┘
               │
               ▼
   ┌───────────────────────┐
   │     Detect peak       │ ～～ S33
   └───────────┬───────────┘
               │
               ▼
   ┌───────────────────────┐
   │   Calculate average   │ ～～ S34
   └───────────┬───────────┘
               │
               ▼
        ╭─────────────╮
        │     End     │
        ╰─────────────╯
```

# FIG. 8

FFT

f (t)

Voltage

Time

F (ω)

Voltage

Frequency

## FIG. 9A

Conversion to distance

Voltage

Frequency

Voltage

Distance

## FIG. 9B

Peak detection

CH1

Voltage

V1

D1 Distance

CH2

Voltage

V2

D2 Distance

CH3

Voltage

V3

D3 Distance

## FIG. 9C

**FIG. 10**

**FIG. 11**

FIG. 12

**FIG. 13**

FIG. 14

FIG. 15A

FIG. 15B

FIG. 15C

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2022038290 A
- WO 2019131298 A
- US 2007171425 A1
- CN 109883460 A

**Non-patent literature cited in the description**

- **JESSE ZHENG**. Optical frequency-modulated continuous-wave (FMCW) interferometry. Springer Science & Business Media, 2005, vol. 107